# EUROPÄISCHE PATENTANMELDUNG

(11) **EP 3 219 226 A1**
(43) Veröffentlichungstag der Anmeldung: **20.09.2017**
(21) Anmeldenummer: 16160311.3
(22) Anmeldetag: 15.03.2016
(51) Int. Cl.: A46B 17/02

(54) **MUNDHYGIENEHALTEGRIFFVORRICHTUNG**

(71) Anmelder: Trisa Holding AG, 6234 Triengen (CH)
(72) Erfinder: Zwimpfer, Martin, 6004 Luzern (CH)
(74) Vertreter: Daub, Thomas

(57) **Zusammenfassung**

Die Erfindung geht aus von einer Mundhygienehaltegriffvorrichtung, die zu einem Halten eines Mundhygienemittels (10a; 10d; 10e; 10f; 10g), insbesondere einer Interdentalbürste, vorgesehen ist, mit zumindest einem Grundkörper (12a; 12b; 12c; 12d; 12e, 12f; 12g), welcher zumindest einen Aufnahmebereich (14a; 14b; 14c; 14d; 14e; 14f; 14g) zu einer Aufnahme des Mundhygienemittels (10a 10d; 10e; 10f; 10g) in einer Anwendungsstellung aufweist.

Es wird vorgeschlagen, dass der Aufnahmebereich (14a; 14b; 14c; 14d; 14e; 14f; 14g) des Grundkörpers (12a; 12b; 12c; 12d; 12e, 12f; 14g) länger als 30 mm und zur Aufnahme eines Griffelements (16a, 16d, 16e, 16f) des Mundhygienemittels (10a; 10d; 10e, 10f; 10g) vorgesehen ist.

## Beschreibung

### Stand der Technik

Die Erfindung betrifft eine Mundhygienehaltegriffvorrichtung nach dem Oberbegriff des Patentanspruchs 1.

Aus der EP 0 980 219 B1 ist bereits ein Haltegriff für einen Interdentalbürsten-Wechselkopf bekannt, bei welchem der Wechselkopf in zwei Orientierungen an dem Haltegriff befestigt werden kann. Der Wechselkopf weist einen Befestigungsbereich zur Befestigung an dem Haltegriff sowie eine Interdentalbürste auf, die abgewinkelt zu dem Befestigungsbereich angeordnet ist. Aufgrund der abgewinkelten Anordnung im Interdentalbürsten-Wechselkopf ergeben sich zwei verschiedene Winkel zwischen der Interdentalbürste und dem Haltegriff für die zwei Orientierungen einer Befestigung des Wechselkopfs an dem Haltegriff.

Ferner ist von der Firma INAVA ein Haltegriff mit einer Aufnahme für Interdentalbürsten-Wechselaufsätze bekannt, an welchem ein Wechselaufsatz für eine gerade Anwendung derart befestigt werden kann, dass eine Bürste des Wechselaufsatzes parallel zu dem Haltegriff verläuft (INAVA ist eine eingetragene Wortmarke). Ferner kann der Wechselaufsatz derart befestigt werden, dass ein Befestigungsbereich der Bürste des Wechselaufsatzes abgeknickt wird und mit dem Haltegriff einen Winkel von etwa 60° einschließt.

Außerdem ist aus der US 2015/0257519 A1 eine Zahnbürste mit einer in einem Griff der Zahnbürste angeordneten Aufnahme, in welcher ein Interdentalbürsten-Zahnreinigungsmittel verstaut werden kann, bekannt.

Die Aufgabe der Erfindung besteht insbesondere darin, eine gattungsgemäße Mundhygienehaltegriffvorrichtung mit verbesserten Eigenschaften hinsichtlich einer vielseitigen Handhabbarkeit bereitzustellen. Die Aufgabe wird erfindungsgemäß durch die Merkmale der Patentansprüche 1 und 2 gelöst, während vorteilhafte Ausgestaltungen und Weiterbildungen der Erfindung den Unteransprüchen entnommen werden können.

### Vorteile der Erfindung

Die Erfindung geht aus von einer Mundhygienehaltegriffvorrichtung, die zu einem Halten eines Mundhygienemittels, insbesondere einer Interdentalbürste, vorgesehen ist, mit zumindest einem Grundkörper, welcher zumindest einen Aufnahmebereich zu einer Aufnahme des Mundhygienemittels in einer Anwendungsstellung aufweist.

Es wird vorgeschlagen, dass der Aufnahmebereich des Grundkörpers länger als 30 mm, vorteilhaft länger als 35 mm, besonders vorteilhaft länger als 40 mm, und zur Aufnahme eines Griffelements des Mundhygienemittels vorgesehen ist.

Durch die erfindungsgemäße Ausgestaltung kann insbesondere eine verbesserte und/oder vielseitige Handhabbarkeit erzielt werden. Vorteilhaft kann ein hoher Komfort erzielt werden. Weiterhin kann insbesondere eine besonders komfortable und/oder ergonomische Griffverlängerung bereitgestellt werden. Außerdem kann ein vorteilhaft hoher Grad an Ergonomie bei einer Anwendung erzielt werden. Weiterhin kann insbesondere ein Mundhygienemittel sicher und/oder kontrolliert und/oder leicht gehalten werden. Außerdem kann eine Interdentalbürste zu einer Zahnreinigung leicht und/oder kontrolliert geführt werden. Ferner kann vorteilhaft ein Mundhygienemittel sicher gelagert und/oder beispielsweise in einem Zahnputzbecher abgestellt und/oder in einem Necessaire transportiert werden. Außerdem können vorteilhafte Eigenschaften hinsichtlich einer kostengünstigen und/oder einfachen und/oder schnellen Herstellung erzielt werden.

Unter einer "Mundhygienehaltegriffvorrichtung" soll insbesondere ein Bestandteil, insbesondere eine Konstruktions- und/oder Funktionskomponente, eines vorteilhaft zu einer einhändigen Benutzung vorgesehenen Mundhygienehaltegriffs, der zu einem Halten eines Mundhygienemittels, insbesondere für eine Zahnreinigungsanwendung, vorgesehen ist, verstanden werden. Vorzugsweise umfasst die Mundhygienehaltegriffvorrichtung den gesamten Mundhygienehaltegriff. Es ist aber auch denkbar, dass die Mundhygienehaltegriffvorrichtung Teil einer, beispielsweise auch elektrischen, Zahnbürste, insbesondere eines Griffbereichs einer Zahnbürste oder eines anderen Mundhygieneprodukts ist. Alle in dieser Schrift beschriebenen und gezeigten Lösungen bez. Mundhygienehaltegriffvorrichtung können auch als Griffbereich einer Zahnbürste oder den Griffbereich eines anderen Mundhygieneproduktes vorgesehen sein. Der Zahnbürstenkopf oder das Nutzseite des Mundhygieneproduktes ist dem Aufnahmebereich der Mundhygienemittel gegenüberliegenden Ende der Mundhygienehaltegriffvorrichtung vorgesehen. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem "Mundhygienemittel" soll insbesondere eine Interdentalbürste und/oder ein Interdentalreiniger und/oder ein Flosser und/oder ein Flosser mit Zahnstocher und/oder ein Flosser mit Interdentalreiniger und/oder ein Zungenreiniger und/oder ein Zahnstocher verstanden werden. Des Weiteren kann unter "Mundhygienemittel" auch eine Einweg- oder Mehrweg-Zahnbürste oder ein Zungenreiniger verstanden werden. Vorteilhaft ist das Mundhygienemittel zu einer alternativen Anwendung vorgesehen, bei welcher das Mundhygienemittel alleine, insbesondere ohne die Mundhygienehaltegriffvorrichtung, verwendet wird. Vorteilhaft weist das Mundhygienemittel zumindest einen Mundhygienemittelgrundkörper auf. Vorzugsweise ist der Mundhygienemittelgrundkörper zumindest teilweise, besonders bevorzugt wenigstens zu einem Großteil, aus einem Kunststoff ausgebildet. Unter dem Ausdruck "wenigstens zu einem Großteil" soll dabei insbesondere zu wenigstens 55 %, vorteilhaft zu wenigstens 65 %, vorzugsweise zu wenigstens 75 %, besonders bevorzugt zu wenigstens 85 % und besonders vorteilhaft zu wenigstens 95 % verstanden werden. Vorteilhaft weist der Kunststoff zumindest eine Hartkomponente auf. Ferner ist denkbar, dass der Kunststoff zumindest eine Weichkomponente aufweist. Unter einer "Hartkomponente" soll dabei insbesondere ein Kunststoff aus dem Bereich der Thermoplaste, beispielsweise ein Hartkunststoff aus einem Styrolpolymerisat, wie beispielsweise Styrolacrylnitril (SAN) oder Polystyrol (PS) oder Acrylnitrylbutadienstyrol (ABS) oder Styrolmethylmethacrylat (SMMA) oder Styrolbutadien (SB), und/oder einem Polyolefin, wie beispielsweise Polypropylen (PP), oder einem Polyethylen (PE), insbesondere High-Density- oder Low-Density-Polyethylen (HDPE/LDPE), und/oder einem Polyester, wie beispielsweise, insbesondere säuremodifiziertem oder glykolmodifiziertem, Polyethylenterephtalat (PETA/PETG) oder Polybutylenterephtalat (PBT) oder säuremodifiziertem Polycyclohexylendimethyleneterephtalat (PCT-A) oder glykolmodifiziertem Polycyclohexylendimethyleneterephtalat (PCT-G) und/oder einem Cellulosederivat, wie beispielsweise Celluloseacetat (CA) oder Celluloseacetobutyrat (CAB) oder Cellulosepropionat (CP) oder Celluloseacetatphtalat (CAP) oder Cellulosebutyral (CB), und/oder einem Polyamid (PA), wie PA 6.6 oder PA 6.10 oder PA 6.12, und/oder Polymethylmethacrylat (PMMA) und/oder Polycarbonat (PC) und/oder Polyoxymethylen (POM) und/oder Polyvinylchlorid (PVC) und/oder Polyurethan (PUR) verstanden werden. Insbesondere weist die Hartkomponente ein Elastizitätsmodul von wenigstens 500 N/mm², vorteilhaft von wenigstens 1000 N/mm² und besonders vorteilhaft von wenigstens 1300 N/mm² auf. Insbesondere weist die Hartkomponente ein Elastizitätsmodul von höchstens 3000 N/mm², vorteilhaft von höchstens 2400 N/mm² und besonders vorteilhaft von höchstens 1800 N/mm² auf. Als Hartkomponente wird besonders bevorzugt ein PP eingesetzt. Unter einer "Weichkomponente" soll insbesondere ein Weichkunststoff, vorteilhaft ein Kunststoff aus dem Bereich der Thermoplaste, wie beispielsweise ein thermoplastisches Polyurethan-Elastomer (TPE-U), ein thermoplastisches Styrol-Elastomer (TPE-S), wie beispielsweise ein Styrol-Ethylen-Butylen-Styrol-Copolymer (SEBS) oder ein Styrol-Butadien-Styrol-Copolymer (SBS), und/oder ein thermoplastisches Polyamid-Elastomer (TPE-A) und/oder ein thermoplastisches Polyolefin-Elastomer (TPE-O) und/oder ein thermoplastisches Polyester-Elastomer (TPE-E) und/oder ein Polyethylen (PE) und/oder ein Polyurethan (PU) verstanden werden. Insbesondere weist die Weichkomponente ein Elastizitätsmodul von wenigstens 1 N/mm², vorteilhaft von wenigstens 10 N/mm² und besonders vorteilhaft von wenigstens 50 N/mm² auf. Insbesondere weist die Weichkomponente ein Elastizitätsmodul von höchstens 1000 N/mm², vorteilhaft von höchstens 500 N/mm² und besonders vorteilhaft von höchstens 200 N/mm² auf. Eine Shore A Härte der Weichkomponente beträgt vorteilhaft weniger als 200, besonders vorteilhaft weniger als 90. Als Weichkomponente wird besonders bevorzugt ein TPE-S eingesetzt.

Generell können als Hart- und/oder Weichkomponente auch sogenannte Biokunststoffe eingesetzt werden, die aus nachwachsenden Rohstoffen hergestellt sind.

Beispielsweise ist denkbar, dass der Mundhygienemittelgrundkörper zumindest einen ersten Bereich mit zumindest einer Hartkomponente aufweist. Ferner ist denkbar, dass der Mundhygienemittelgrundkörper zumindest einen zweiten Bereich mit zumindest einer Weichkomponente aufweist. Vorzugsweise ist der erste Bereich in einem zentralen Bereich des Mundhygienemittelgrundkörpers angeordnet, insbesondere relativ zu einer parallel zu einer Haupterstreckungsrichtung des Mundhygienemittelgrundkörpers angeordneten Schwerpunktachse des Mundhygienemittelgrundkörpers. Unter einer "Haupterstreckungsrichtung" eines Objekts soll dabei insbesondere eine Richtung verstanden werden, welche parallel zu einer längsten Kante eines kleinsten gedachten Quaders verläuft, welcher das Objekt gerade noch vollständig umschließt. Besonders bevorzugt bildet der zweite Bereich zumindest einen Griffbereich aus. Vorteilhaft bildet der Mundhygienemittelgrundkörper zumindest ein Griffelement aus. Besonders vorteilhaft ist das Griffelement zu einem Halten des Mundhygienemittels, insbesondere mit einer Hand, vorteilhaft in zumindest einer alternativen Anwendung, insbesondere ohne die Mundhygienehaltegriffvorrichtung, vorgesehen. Vorteilhaft ist der Mundhygienemittelgrundkörper rundlich und/oder quaderförmig und/oder flach ausgebildet. Besonders vorteilhaft weist der Mundhygienemittelgrundkörper einen Querschnitt auf, der zu zumindest einer Ebene spiegelsymmetrisch ausgebildet ist, insbesondere zu einer Ebene parallel zu der Haupterstreckungsrichtung des Mundhygienemittelgrundkörpers. Vorzugsweise weist der Mundhygienemittelgrundkörper einen sich entlang der Haupterstreckungsrichtung des Mundhygienemittelgrundkörpers verändernden Querschnitt auf. Es ist aber auch denkbar, dass der Mundhygienemittelgrundkörper einen zumindest im Wesentlichen konstanten Querschnitt aufweist. Darunter, dass ein Objekt einen "zumindest im Wesentlichen konstanten Querschnitt" aufweist, soll dabei insbesondere verstanden werden, dass für einen beliebigen ersten Querschnitt des Objekts entlang zumindest einer Richtung und einen beliebigen zweiten Querschnitt des Objekts entlang der Richtung ein minimaler Flächeninhalt einer Differenzfläche, die bei einem Übereinanderlegen der Querschnitte gebildet wird, maximal 20 %, vorteilhaft maximal 10 % und besonders vorteilhaft maximal 5 % des Flächeninhalts des größeren der beiden Querschnitte beträgt. Insbesondere ist denkbar, dass der Mundhygienemittelgrundkörper einen zumindest im Wesentlichen ellipsenförmigen oder kreisförmigen Querschnitt aufweist. Darunter, dass ein Objekt einen "zumindest im Wesentlichen ellipsenförmige/kreisförmigen Querschnitt" aufweist, soll dabei insbesondere verstanden werden, dass für wenigstens 60 %, vorteilhaft für wenigstens 70 %, besonders vorteilhaft für wenigstens 80 % und bevorzugt für wenigstens 90 % aller Querschnitte des Objekts entlang zumindest einer Richtung ein Flächeninhalt einer Differenzfläche des Querschnitts und eines kleinsten den Querschnitt umgebenden Kreises/einer kleinsten den Querschnitt umgebenden Ellipse maximal 30 %, vorteilhaft maximal 20 %, besonders vorteilhaft maximal 10 % und bevorzugt maximal 5 % des Flächeninhalts des Kreises/der Ellipse beträgt.

Insbesondere weist der Mundhygienemittelgrundkörper eine Länge von wenigstens 30 mm, vorteilhaft von wenigstens 45 mm und besonders vorteilhaft von wenigstens 55 mm auf. Insbesondere weist der Mundhygienemittelgrundkörper eine Länge von höchstens 100 mm, vorteilhaft von höchstens 80 mm und besonders vorteilhaft von höchstens 60 mm auf. Insbesondere weist der Mundhygienemittelgrundkörper eine Breite von wenigstens 3 mm, vorteilhaft von wenigstens 5 mm und besonders vorteilhaft von wenigstens 7 mm auf. Insbesondere weist der Mundhygienemittelgrundkörper eine Breite von höchstens 20 mm, vorteilhaft von höchstens 15 mm und besonders vorteilhaft von höchstens 12 mm auf. Insbesondere weist der Mundhygienemittelgrundkörper eine Höhe von wenigstens 2 mm, vorteilhaft von wenigstens 4 mm und besonders vorteilhaft von wenigstens 6 mm auf. Insbesondere weist der Mundhygienemittelgrundkörper eine Höhe von höchstens 10 mm, vorteilhaft von höchstens 8 mm und besonders vorteilhaft von höchstens 7 mm auf.

Es ist aber auch denkbar, dass das Mundhygienemittel als ein Wechselteil ausgebildet ist, welches nicht ohne Mundhygienehaltegriffvorrichtung nutzbar ist. Insbesondere ist denkbar, dass der Mundhygienemittelgrundkörper als ein Verbindungselement ausgebildet ist, das zu einer Befestigung an der Mundhygienehaltegriffvorrichtung vorgesehen ist.

Ist das Mundhygienemittel als ein Wechselteil ausgebildet, weist der Mundhygienemittelgrundkörper insbesondere eine Länge von wenigstens 10 mm, vorteilhaft von wenigstens 15 mm und besonders vorteilhaft von wenigstens 20 mm auf. Ist das Mundhygienemittel als ein Wechselteil ausgebildet, weist der Mundhygienemittelgrundkörper insbesondere eine Länge von höchstens 35 mm, vorteilhaft von höchstens 30 mm und besonders vorteilhaft von höchstens 25 mm auf. Ist das Mundhygienemittel als ein Wechselteil ausgebildet, weist der Mundhygienemittelgrundkörper insbesondere eine Breite und/oder eine Höhe von wenigstens 2 mm, vorteilhaft von wenigstens 3 mm und besonders vorteilhaft von wenigstens 5 mm auf. Ist das Mundhygienemittel als ein Wechselteil ausgebildet, weist der Mundhygienemittelgrundkörper insbesondere eine Breite und/oder eine Höhe von höchstens 10 mm, vorteilhaft von höchstens 8 mm und besonders vorteilhaft von höchstens 6 mm auf. Das Wechselteil ist in diesem Fall eher einfach gehalten und nur aus einer Kunststoffkomponente hergestellt, denn die Anforderungen an das Teil sind reduziert gegenüber Mundhygienemitteln, welche auch alleine genutzt werden können. Das Wechselteil ist von der Griffgeometrie her so ausgelegt, dass sie optimal mit der Schnittstelle der Mundhygienehaltegriffvorrichtung zusammen spielt. Des Weiteren ist das Volumen maximal reduziert.

Besonders bevorzugt ist zumindest ein Mundhygienemittelgrundkörperrohling in einem Spritzgussverfahren hergestellt, wobei die jeweiligen Hart- und/oder Weichkomponente oder -komponenten nach dem Aufspritzen der Weichkomponente(n) auf die Hartkomponente(n) vorzugsweise einen Materialschluss eingehen. Es ist aber auch denkbar, die geometrische Gestaltung von Körpern so zu realisieren, dass die Komponenten mittels Formschluss verbunden sind. Vorteilhaft ist der Mundhygienemittelgrundkörper, insbesondere senkrecht zu der Haupterstreckungsrichtung des Mundhygienemittelgrundkörpers, zumindest teilweise elastisch biegsam ausgebildet.

Vorteilhaft weist das Mundhygienemittel zumindest einen Reinigungsbereich auf, der zu einer Zahnreinigungsanwendung, insbesondere in einem Mundraum, vorgesehen ist. Vorzugsweise umfasst der Reinigungsbereich zumindest ein Reinigungselement. Besonders bevorzugt ist der Reinigungsbereich mit dem Mundhygienemittelgrundkörper, insbesondere einstückig, verbunden. Unter "einstückig" soll insbesondere zumindest stoffschlüssig bzw. materialschlüssig verbunden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Es ist denkbar, dass das Reinigungselement mittels eines Umspritzprozesses und/oder eines Einsteckens und/oder eines Einschraubens und/oder eines Klebens an dem Mundhygienemittelgrundkörper befestigt ist.

Insbesondere ist das Reinigungselement als eine Bürste, vorteilhaft ein Interdentalbürstenkopf und/oder als, insbesondere an einem Haltebügel befestigte, Zahnseide und/oder als ein Zahnstocher und/oder als ein Zungenreiniger ausgebildet. Ist das Reinigungselement als eine Bürste ausgebildet, weist das Reinigungselement insbesondere eine Länge von wenigstens 5 mm, vorteilhaft von wenigstens 8 mm und besonders vorteilhaft von wenigstens 10 mm auf. Ist das Reinigungselement als eine Bürste ausgebildet, weist das Reinigungselement insbesondere eine Länge von höchstens 25 mm, vorteilhaft von höchstens 17 mm und besonders vorteilhaft von höchstens 15 mm auf. Eine Länge des Reinigungselements erstreckt sich dabei insbesondere von einem dem Mundhygienemittelgrundkörper nächsten Punkt des Reinigungselements (z.B. der Austrittsstelle aus dem Grundkörper), der außerhalb des Mundhygienemittelgrundkörpers angeordnet ist, bis zu einem von dem Mundhygienemittelgrundkörper entferntesten Punkt des Reinigungselements. Vorzugsweise erstreckt sich eine Länge des Reinigungselements zumindest im Wesentlichen parallel zu der Haupterstreckungsrichtung des Mundhygienemittelgrundkörpers. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Ist das Reinigungselement als eine Bürste ausgebildet, weist das Reinigungselement insbesondere eine Breite und/oder eine Höhe von wenigstens 1 mm, vorteilhaft von wenigstens 2 mm und besonders vorteilhaft von wenigstens 3 mm auf. Ist das Reinigungselement als eine Bürste ausgebildet, weist das Reinigungselement insbesondere eine Breite und/oder eine Höhe von höchstens 10 mm, vorteilhaft von höchstens 7 mm und besonders vorteilhaft von höchstens 5 mm auf.

Ist das Reinigungselement als eine Bürste ausgebildet, weist das Reinigungselement vorteilhaft zumindest eine Rotationssymmetrie auf, insbesondere bezüglich einer Haupterstreckungsrichtung des Reinigungselements. Beispielsweise kann das Reinigungselement zumindest abschnittsweise zumindest im Wesentlichen zylinderförmig und/oder zumindest im Wesentlichen kegelförmig und/oder zumindest im Wesentlichen kegelstumpfförmig und/oder zumindest im Wesentlichen pyramidenförmig ausgebildet sein. Unter einem "zumindest im Wesentlichen zylinderförmigen/kegelförmigen/kegelstumpfförmigen/pyramidenförmigen Objekt" soll dabei insbesondere ein Objekt verstanden werden, für welches ein Differenzvolumen des Objekts und eines/einer kleinsten das Objekt umgebenden Zylinders/Kegels/Kegelstumpfs/Pyramide maximal 30 %, vorteilhaft maximal 20 %, besonders vorteilhaft maximal 10 % und bevorzugt maximal 5 % des Volumens des/der Zylinders/Kegels/Kegelstumpfs/Pyramide beträgt. Ferner ist denkbar, dass das Reinigungselement einen kreisförmigen und/oder einen ellipsenförmigen und/oder einen runden und/oder einen dreieckigen und/oder einen viereckigen und/oder einen polygonalen Querschnitt aufweist, insbesondere senkrecht zu der Haupterstreckungsrichtung des Reinigungselements. Außerdem kann das Reinigungselement ein zumindest abschnittsweise konkaves und/oder konvexes und oder gewelltes und/oder gerades Profil aufweisen, insbesondere entlang der Haupterstreckungsrichtung des Reinigungselements.

Außerdem ist denkbar, dass das Mundhygienemittel zumindest eine Schutzkappe aufweist, die dazu vorgesehen ist, einen Reinigungsbereich zumindest teilweise abzudecken. Insbesondere ist die Schutzkappe dazu vorgesehen, entlang einer Richtung zumindest im Wesentlichen parallel zu der Haupterstreckungsrichtung des Mundhygienemittelgrundkörpers über den Reinigungsbereich geschoben zu werden. Vorteilhaft weist die Schutzkappe zumindest eine Schutzkappenöffnung auf, welche dazu vorgesehen ist, bei einem Aufstecken der Schutzkappe auf den Mundhygienemittelgrundkörper über den Reinigungsbereich geschoben zu werden. Besonders vorteilhaft ist in einem aufgesteckten Zustand der Schutzkappe der Reinigungsbereich zu wenigstens einem Großteil innerhalb der Schutzkappe angeordnet. Vorzugsweise ist die Schutzkappe zumindest teilweise einer Form des Mundhygienemittelgrundkörpers angepasst. Vorteilhaft ist die Schutzkappe auf ein dem Reinigungsbereich abgewandtes Ende des Mundhygienemittelgrundkörpers oder der Mundhygienehaltegriffvorrichtung aufsteckbar ausgebildet.

Vorteilhaft ist der Grundkörper der Mundhygienehaltegriffvorrichtung zumindest teilweise, besonders vorteilhaft zu wenigstens einem Großteil aus einem Kunststoff ausgebildet. Vorteilhaft weist der Kunststoff zumindest eine Hartkomponente auf. Beispielsweise ist denkbar, dass der Grundkörper zumindest einen ersten Bereich mit zumindest einer Hartkomponente aufweist. Ferner ist denkbar, dass der Grundkörper zumindest einen zweiten Bereich mit zumindest einer Weichkomponente aufweist. Vorzugsweise ist der erste Bereich in einem zentralen Bereich des Grundkörpers angeordnet, insbesondere relativ zu einer parallel zu einer Haupterstreckungsrichtung des Grundkörpers angeordneten Schwerpunktachse des Grundkörpers. Insbesondere kann der zweite Bereich eine andere Farbe und/oder eine andere Oberflächenstruktur aufweisen als der erste Bereich.

Insbesondere weist der Grundkörper eine Länge von wenigstens 60 mm, vorteilhaft von wenigstens 100 mm und besonders vorteilhaft von wenigstens 115 mm auf. Insbesondere weist der Grundkörper eine Länge von höchstens 250 mm, vorteilhaft von höchstens 180 mm und besonders bevorzugt von höchstens 135 mm auf. Insbesondere weist der Grundkörper eine Höhe von wenigstens 3 mm, vorteilhaft von wenigstens 4 mm und besonders vorteilhaft von wenigstens 5 mm auf. Insbesondere weist der Grundkörper eine Höhe von höchstens 15 mm, vorteilhaft von höchstens 12 mm und besonders vorteilhaft von höchstens 8 mm auf. Insbesondere weist der Grundkörper eine Breite von wenigstens 7 mm, vorteilhaft von wenigstens 10 mm und besonders vorteilhaft von wenigstens 12 mm auf. Insbesondere weist der Grundkörper eine Breite von höchstens 25 mm, vorteilhaft von höchstens 18 mm und besonders vorteilhaft von höchstens 15 mm auf. Vorzugsweise weist der Grundkörper einen Querschnitt auf, der zu zumindest einer Ebene spiegelsymmetrisch ausgebildet ist, insbesondere zu einer Ebene parallel zu der Haupterstreckungsrichtung des Grundkörpers. Vorzugsweise weist der Grundkörper einen sich entlang der Haupterstreckungsrichtung des Grundkörpers verändernden Querschnitt auf. Insbesondere ist der Grundkörper zumindest abschnittsweise tailliert ausgebildet. Vorteilhaft ist der Grundkörper zu einem Halten mit einer Hand, insbesondere mit einer Handinnenfläche und/oder mit einem Daumen vorgesehen.

Insbesondere ist der Aufnahmebereich als eine Ausnehmung in dem Grundkörper ausgebildet. Vorteilhaft ist eine Form des Aufnahmebereichs einer Form des Mundhygienemittels, insbesondere einer Form des Mundhygienemittelgrundkörpers angepasst. Insbesondere ist der Aufnahmebereich dazu vorgesehen, das Mundhygienemittel zumindest teilweise aufzunehmen. Vorzugsweise ist der Aufnahmebereich dazu vorgesehen, den Mundhygienemittelgrundkörper zumindest teilweise, vorteilhaft zu wenigstens einem Großteil aufzunehmen. Insbesondere entspricht eine Länge des Aufnahmebereichs zumindest im Wesentlichen einer Länge des Mundhygienemittelgrundkörpers. Unter "zumindest im Wesentlichen" soll in diesem Zusammenhang insbesondere verstanden werden, dass eine Abweichung von einem vorgegebenen Wert insbesondere weniger als 25 %, vorzugsweise weniger als 15 % und besonders bevorzugt weniger als 5 % des vorgegebenen Werts entspricht. Bevorzugt ist der Aufnahmebereich an einer Unterseite des Grundkörpers angeordnet. Besonders bevorzugt erstreckt sich die Unterseite des Grundkörpers parallel zu der Haupterstreckungsrichtung des Grundkörpers. Vorteilhaft verläuft eine Haupterstreckungsrichtung des Aufnahmebereichs zumindest im Wesentlichen parallel zu der Haupterstreckungsrichtung des Grundkörpers. Besonders vorteilhaft ist der Aufnahmebereich zu einer Vorderseite des Grundkörpers hin zumindest teilweise geöffnet. Vorzugsweise verläuft die Vorderseite des Grundkörpers zumindest abschnittsweise zumindest im Wesentlichen senkrecht zu der Haupterstreckungsrichtung des Grundkörpers. Unter "zumindest im Wesentlichen senkrecht" soll hier insbesondere eine Ausrichtung einer Richtung relativ zu einer Bezugsrichtung, insbesondere in einer Bezugsebene, verstanden werden, wobei die Richtung und die Bezugsrichtung einen Winkel einschließen, der um insbesondere weniger als 8°, vorteilhaft weniger als 5° und besonders vorteilhaft weniger als 2° von einem rechten Winkel abweicht. Bevorzugt weist der Aufnahmebereich zumindest eine Zugangsöffnung auf, die zu einem Einführen des Mundhygienemittels zumindest im Wesentlichen senkrecht zu der Haupterstreckungsrichtung des Grundkörpers in den Aufnahmebereich vorgesehen ist. Vorteilhaft ist die Zugangsöffnung an der Unterseite des Grundkörpers angeordnet. Es ist aber auch denkbar, dass der Aufnahmebereich eine Zugangsöffnung aufweist, die zu einem Einführen des Mundhygienemittels zumindest im Wesentlichen parallel zu der Haupterstreckungsrichtung des Grundkörpers in den Aufnahmebereich vorgesehen ist. Ferner ist denkbar, dass die Zugangsöffnung auf der Vorderseite des Mundhygienemittels angeordnet ist.

Unter einer "Aufnahme des Mundhygienemittels in einer Anwendungsstellung" soll dabei insbesondere eine Fixierung des Mundhygienemittels relativ zu dem Grundkörper verstanden werden, wobei insbesondere eine Führung und/oder Bewegung des Reinigungsbereichs des fixierten Mundhygienemittels bei einer Zahnreinigungsanwendung mittels eines Bewegens und/oder Führens des Grundkörpers ermöglicht wird. Insbesondere ist in der Anwendungsstellung der Reinigungsbereich des Mundhygienemittels in einer Projektion auf die Haupterstreckungsrichtung des Grundkörpers zumindest teilweise neben dem Grundkörper angeordnet. Bevorzugt ist der Aufnahmebereich zu einem Halten des Mundhygienemittels in der Anwendungsstellung vorgesehen, bei welchem der Reinigungsbereich des Mundhygienemittels, insbesondere an der Vorderseite des Grundkörpers, über den Grundkörper hinaus ragt. Vorteilhaft ist der Aufnahmebereich zu einem Halten des Mundhygienemittels in der Anwendungsstellung vorgesehen, bei welchem eine Haupterstreckungsrichtung des Reinigungsbereichs zumindest im Wesentlichen parallel zu der Haupterstreckungsrichtung des Grundkörpers verläuft.

Ferner geht die Erfindung aus von einer Mundhygienehaltegriffvorrichtung, die zu einem Halten eines Mundhygienemittels, insbesondere einer Interdentalbürste, vorgesehen ist, mit zumindest einem Grundkörper, welcher zumindest einen Aufnahmebereich zur Aufnahme des Mundhygienemittels in einer Anwendungsstellung aufweist.

Es wird vorgeschlagen, dass der Grundkörper zumindest einen Verstaubereich zur Aufnahme des Mundhygienemittels in einer Verstaustellung aufweist.

Durch die erfindungsgemäße Ausgestaltung kann insbesondere eine verbesserte und/oder vielseitige Handhabbarkeit erzielt werden. Vorteilhaft kann ein hoher Komfort erzielt werden. Weiterhin kann insbesondere eine besonders komfortable und/oder ergonomische Griffverlängerung bereitgestellt werden. Außerdem kann eine vorteilhaft hohe Ergonomie bei einer Anwendung erzielt werden. Weiterhin kann insbesondere ein Mundhygienemittel sicher und/oder kontrolliert und/oder leicht gehalten werden. Außerdem kann eine Interdentalbürste zu einer Zahnreinigung leicht und/oder kontrolliert geführt werden. Ferner kann vorteilhaft ein Mundhygienemittel sicher gelagert und/oder beispielsweise in einem Zahnputzbecher abgestellt und/oder in einem Necessaire transportiert werden. Außerdem können vorteilhafte Eigenschaften hinsichtlich einer kostengünstigen und/oder einfachen und/oder schnellen Herstellung erzielt werden.

Insbesondere ist der Verstaubereich als eine Ausnehmung in dem Grundkörper ausgebildet. Vorteilhaft ist eine Form des Verstaubereichs einer Form des Mundhygienemittels, insbesondere einer Form des Reinigungsbereichs des Mundhygienemittels, angepasst. Insbesondere ist der Verstaubereich dazu vorgesehen, das Mundhygienemittel zumindest teilweise aufzunehmen. Vorzugsweise ist der Verstaubereich dazu vorgesehen, den Reinigungsbereich des Mundhygienemittels zumindest teilweise, vorteilhaft zu wenigstens einem Großteil aufzunehmen. Insbesondere entspricht eine Länge des Verstaubereichs zumindest im Wesentlichen einer Länge des Mundhygienemittels. Bevorzugt ist der Verstaubereich an einer Unterseite des Grundkörpers angeordnet. Besonders bevorzugt erstreckt sich die Unterseite des Grundkörpers parallel zu der Haupterstreckungsrichtung des Grundkörpers. Vorteilhaft verläuft eine Haupterstreckungsrichtung des Verstaubereichs zumindest im Wesentlichen parallel zu der Haupterstreckungsrichtung des Grundkörpers. Bevorzugt weist der Verstaubereich zumindest eine Zugangsöffnung auf, die zu einem Einführen des Mundhygienemittels, insbesondere des Reinigungsbereichs des Mundhygienemittels, zumindest im Wesentlichen senkrecht zu der Haupterstreckungsrichtung des Grundkörpers in den Aufnahmebereich vorgesehen ist. Vorteilhaft ist die Zugangsöffnung des Verstaubereichs an der Unterseite des Grundkörpers angeordnet. Es ist aber auch denkbar, dass der Verstaubereich eine Zugangsöffnung aufweist, die zu einem Einführen des Mundhygienemittels zumindest im Wesentlichen parallel zu der Haupterstreckungsrichtung des Grundkörpers in den Aufnahmebereich vorgesehen ist. Insbesondere ist in diesem Fall die Zugangsöffnung des Verstaubereichs von der Vorderseite des Grundkörpers und vorzugsweise von dem Aufnahmebereich her zugänglich.

Unter einer "Aufnahme des Mundhygienemittels in einer Verstaustellung" soll dabei insbesondere eine Fixierung des Mundhygienemittels in einer Lage relativ zu dem Grundkörper verstanden werden, in welcher zumindest ein Teil des Mundhygienemittels und vorteilhaft zumindest der Reinigungsbereich des Mundhygienemittels in einer Projektion senkrecht zu der Haupterstreckungsrichtung des Grundkörpers innerhalb des Grundkörpers angeordnet ist. Insbesondere ist der Verstaubereich zu einem Lagern des Mundhygienemittels in der Verstaustellung vorgesehen, bei welchem die Haupterstreckungsrichtung des Reinigungsbereichs parallel zu der Haupterstreckungsrichtung des Grundkörpers verläuft. Vorteilhaft ist der Verstaubereich zu einem Lagern des Mundhygienemittels in der Verstaustellung vorgesehen, bei welchem der Reinigungsbereich des Mundhygienemittels der Vorderseite des Grundkörpers abgewandt ist.

Es ist denkbar, dass der Grundkörper zumindest ein Piktogramm und/oder zumindest eine Beschriftung, insbesondere in dem Aufnahmebereich und/oder in dem Verstaubereich aufweist, vorteilhaft eine zumindest skizzierte Montage- und/oder Demontageanleitung für ein Mundhygienemittel in dem Aufnahmebereich in der Anwendungsstellung und/oder in dem Verstaubereich in der Verstaustellung. Vorzugsweise ist das Piktogramm und/oder die Beschriftung dazu vorgesehen, in der Anwendungsstellung und/oder in der Verstaustellung zumindest teilweise, vorteilhaft zu wenigstens einem Großteil von dem Mundhygienemittel, besonders vorteilhaft von dem Mundhygienemittelgrundkörper, verdeckt zu werden.

Falls das Mundhygienemittel zumindest eine Schutzkappe aufweist, ist denkbar, dass der Grundkörper zumindest einen Schutzkappenverstaubereich aufweist, der vorteilhaft auf einer der Vorderseite des Grundkörpers abgewandten Seite des Grundkörpers angeordnet ist und der zu einer Aufnahme der Schutzkappe vorgesehen ist. Vorteilhaft kann eine Schutzkappe verstaut werden, insbesondere während das Mundhygienemittel in einer Anwendungsstellung und/oder in einer Verstaustellung gehalten wird.

In einer vorteilhaften Ausgestaltung der Erfindung wird vorgeschlagen, dass der Aufnahmebereich den Verstaubereich zumindest teilweise ausbildet. Vorteilhaft sind der Aufnahmebereich und der Verstaubereich einteilig verbunden. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Vorzugsweise bildet der Aufnahmebereich zumindest einen ersten Teilbereich des Verstaubereichs aus, der zumindest in der Verstaustellung dazu vorgesehen ist, den Mundhygienemittelgrundkörper des Mundhygienemittels zumindest teilweise, vorteilhaft zu wenigstens einem Großteil aufzunehmen. Besonders bevorzugt weist der Verstaubereich zumindest einen zweiten Teilbereich auf, der dazu vorgesehen ist, den Reinigungsbereich des Mundhygienemittels zumindest teilweise, vorteilhaft zu wenigstens einem Großteil aufzunehmen. Vorteilhaft ist der erste Teilbereich in einer Betrachtung senkrecht zu der Haupterstreckungsrichtung des Grundkörpers neben dem zweiten Teilbereich angeordnet. Vorteilhaft bilden der erste Teilbereich und der zweite Teilbereich den Verstaubereich aus. Insbesondere sind der Aufnahmebereich und der Verstaubereich als eine, insbesondere an einer Unterseite des Grundkörpers angeordnete gemeinsame Ausnehmung des Grundkörpers ausgebildet. Hierbei ist denkbar, dass der Grundkörper zumindest eine, insbesondere klappfähig angeordnete, beispielsweise mittels eines Scharniers, vorzugsweise eines Filmscharniers befestigte und/oder faltbare und/oder rastend verbundene und/oder verliersicher befestigte und/oder schiebbare Abdeckung aufweist, welche zumindest einen Teil des Verstaubereichs und/oder zumindest einen Teil des Aufnahmebereichs abdeckt, insbesondere zu einer Außenseite, vorteilhaft zu der Unterseite des Grundkörpers hin. Hierdurch kann vorteilhaft eine bauliche Einfachheit und/oder eine intuitive Handhabbarkeit erzielt werden. Vorteilhaft kann hierdurch ein gemeinsamer Bereich ein Mundhygienemittel in verschiedenen Positionen aufnehmen.

Es ist aber auch denkbar, dass zumindest der zweite Teilbereich des Verstaubereichs als ein Sackloch ausgebildet ist, dessen Öffnung insbesondere im Wesentlichen parallel zu der Haupterstreckungsrichtung des Grundkörpers verläuft. Insbesondere ist denkbar, dass der Aufnahmebereich und der Verstaubereich als ein gemeinsames Sackloch ausgebildet sind, dessen Öffnung insbesondere senkrecht zu der Haupterstreckungsrichtung des Grundkörpers und vorteilhaft an dessen Vorderseite angeordnet ist. Vorzugsweise ist in diesem Fall der Verstaubereich von der Vorderseite des Grundkörpers aus, insbesondere entlang der Haupterstreckungsrichtung des Grundkörpers betrachtet, hinter dem Aufnahmebereich angeordnet. Besonders vorteilhaft ist in diesem Fall ein Querschnitt des Aufnahmebereichs und/oder ein Querschnitt einer Zugangsöffnung zu dem Aufnahmebereich zumindest teilweise an einen Querschnitt des Mundhygienemittelgrundkörpers angepasst. Ferner ist insbesondere denkbar, dass der Grundkörper zumindest einen Kanal aufweist, der den Verstaubereich mit einer Außenseite, insbesondere mit einer der Vorderseite gegenüberliegenden Rückseite des Grundkörpers verbindet, vorteilhaft um ein zuverlässiges Trocknen des Mundhygienemittels zu gewährleisten. Vorzugsweise weist der Kanal einen Durchmesser zwischen 0,5 mm und 3 mm auf.

Vorzugsweise wird zu einem Einlegen des Mundhygienemittels in den Aufnahmebereich und/oder in den Verstaubereich das Mundhygienemittel durch die entsprechende Zugangsöffnung durchgeführt und, insbesondere anschließend entlang der Haupterstreckungsrichtung des Grundkörpers verschoben, vorteilhaft eingerastet. Insbesondere in dem Fall, dass der Aufnahmebereich und/oder der Verstaubereich zumindest teilweise als ein, vorteilhaft gemeinsames Sackloch ausgebildet sind/ist, sind/ist der Aufnahmebereich und/oder der Verstaubereich dazu vorgesehen, ein Einlegen des Mundhygienemittels mittels eines Verschiebens entlang der Haupterstreckungsrichtung des Grundkörpers zu ermöglichen.

In einer besonders vorteilhaften Ausgestaltung der Erfindung wird vorgeschlagen, dass der Verstaubereich auf einer dem Aufnahmebereich abgewandten Seite einen kleineren Querschnitt aufweist als der Aufnahmebereich. Vorzugsweise weist der zweite Teilbereich des Verstaubereichs einen kleineren Querschnitt auf als der Aufnahmebereich. Vorteilhaft weist der Verstaubereich entlang der Haupterstreckungsrichtung des Grundkörpers, insbesondere ausgehend von einer der Vorderseite des Grundkörpers zugewandten Seite des Verstaubereichs her einen sich verjüngenden Querschnitt auf. Besonders vorteilhaft ist der Querschnitt des Verstaubereichs, insbesondere zumindest in dem zweiten Teilbereich des Verstaubereichs, an einen Querschnitt des Reinigungsbereichs des Mundhygienemittels angepasst. Hierdurch kann vorteilhaft eine sichere und/oder verschmutzungsgeschützte Verstauung des Mundhygienemittels erzielt werden. Ferner kann hierdurch ein fehlerhaftes Einlegen des Mundhygienemittels durch einen Benutzer vermieden und/oder eine intuitive Handhabung erzielt werden.

In einer weiteren Ausgestaltung der Erfindung wird vorgeschlagen, dass der Verstaubereich dazu vorgesehen ist, den Reinigungsbereich des Mundhygienemittels berührungsfrei zu lagern. Insbesondere ist der Verstaubereich dazu vorgesehen, das Mundhygienemittel an dem Mundhygienegrundkörper zu halten. Vorteilhaft beträgt in der Verstaustellung ein minimaler Abstand zwischen dem Reinigungsbereich, insbesondere dem Reinigungselement, und dem Grundkörper wenigstens 0,1 mm. Vorteilhaft beträgt in der Verstaustellung ein minimaler Abstand zwischen dem Reinigungsbereich, insbesondere dem Reinigungselement, und dem Grundkörper höchstens 1 mm, besonders vorteilhaft höchstens 0,5 mm. Hierdurch kann ein zuverlässiges Trocknen des Mundhygienemittels, insbesondere nach einer Anwendung, und/oder eine vorteilhaft hohe Hygiene erzielt werden. Ferner kann vorteilhaft ein Verbiegen und/oder eine Beschädigung des Mundhygienemittels in der Verstaustellung vermieden werden.

Weiter wird vorgeschlagen, im zweiten Teilbereich des Verstaubereichs, in welchem sich im verstauten Zustand der Reinigungsbereich befindet, kleinere Durchgangslöcher durch den Grundkörper der Mundhygienehaltegriffvorrichtung zu gestalten, die insbesondere ein besseres Trocknen des Reinigungsbereichs nach der Anwendung ermöglichen.

Ferner wird vorgeschlagen, dass der Verstaubereich eine Mantelfläche aufweist, welche den Reinigungsbereich des Mundhygienemittels in zumindest einer Schnittebene senkrecht zu einer Haupterstreckungsrichtung des Grundkörpers über einen Winkelbereich von mehr als 180° umgibt. Insbesondere existieren zumindest zwei Geraden in einer Ebene senkrecht zu einer Zentralachse der Mantelfläche, welche die Zentralachse schneiden, die einen Winkel von mehr als 180° einschließen. Unter einer "Zentralachse" eines Objekts soll dabei insbesondere eine gedachte Achse verstanden werden, die innerhalb des Objekts parallel zu einer Haupterstreckungsrichtung des Objekts verläuft und das Objekt an höchstens zwei Seiten schneidet. Insbesondere weist der zweite Teilbereich des Verstaubereichs die Mantelfläche auf. Insbesondere erstreckt sich die Mantelfläche in einer Projektion entlang der Zentralachse des Verstaubereichs in wenigstens einem Großteil aller Richtungen ausgehend von der Zentralachse des Verstaubereichs weiter als der Reinigungsbereich des Mundhygienemittels, wenn dieses in der Verstaustellung angeordnet ist. Hierdurch kann vorteilhaft ein verstautes Mundhygienemittel vor Verschmutzungen geschützt werden. Ferner kann hierdurch ein Kontakt eines Reinigungsbereichs bei einem Ablegen der Mundhygienehaltegriffvorrichtung vermieden werden.

In einer bevorzugten Ausgestaltung der Erfindung wird vorgeschlagen, dass der Aufnahmebereich zumindest ein Fixierelement aufweist, welches zu einem zumindest teilweisen Fixieren des Mundhygienemittels in der Anwendungsstellung und in der Verstaustellung vorgesehen ist. Insbesondere kann das Fixierelement zylinderförmig und/oder kegelstumpfförmig und/oder pyramidenstumpfförmig und/oder länglich und/oder streifenartig und/oder kammartig und/oder quaderförmig und/oder kugelsegmentförmig und/oder rotationskörpersegmentförmig ausgebildet sein. Vorteilhaft ist das Fixierelement zu einer rastenden und/oder klemmenden Verbindung mit dem Mundhygienemittel vorgesehen. Besonders vorteilhaft ist das Fixierelement dazu vorgesehen, das Mundhygienemittel in der Anwendungsstellung in einem anderen Bereich zu fixieren und/oder zu berühren als in der Verstaustellung. Vorzugsweise ist das Fixierelement dazu vorgesehen, das Mundhygienemittel in der Anwendungsstellung und/oder in der Verstaustellung zumindest teilweise gegen eine Mantelfläche des Aufnahmebereichs und/oder des Verstaubereichs zu pressen. Bevorzugt ist das Fixierelement einteilig mit dem Aufnahmebereich und/oder mit dem Verstaubereich verbunden. Vorteilhaft weist das Fixierelement zumindest eine Hartkomponente auf. Insbesondere ist das Fixierelement vorteilhaft härter und/oder weniger elastisch als ein zu einem Fixieren durch das Fixierelement vorgesehener Bereich des Mundhygienemittels. Beispielsweise ist das Fixierelement aus Hartkomponente gestaltet und insbesondere das entsprechende Gegenstück am Mundhygienemittel aus Weichkomponente. Es ist aber auch denkbar, dass das Fixierelement zumindest eine Weichkomponente aufweist. In diesem Fall ist ferner denkbar, dass das Fixierelement weicher und/oder elastischer ist als ein zu einem Fixieren durch das Fixierelement vorgesehener Bereich des Mundhygienemittels. Hierdurch kann vorteilhaft eine Teilevielfalt reduziert und/oder eine einfache Herstellung ermöglicht werden. Ein Ausgleich von Fertigungstoleranzen kann geschaffen werden. Ferner kann hierdurch eine sichere Befestigung des Mundhygienemittels an der Mundhygienehaltegriffvorrichtung ermöglicht werden.

In einer besonders bevorzugten Ausgestaltung der Erfindung wird vorgeschlagen, dass das Fixierelement als eine Erhebung ausgebildet ist, die sich entlang zumindest einer Richtung über höchstens 10 %, vorteilhaft über höchstens 7 % und besonders vorteilhaft über höchstens 5 % einer Erstreckung des Grundkörpers entlang der Richtung erstreckt. Vorteilhaft weist das Fixierelement, insbesondere entlang der Haupterstreckungsrichtung des Grundkörpers eine Länge von wenigstens 0,2 mm und vorteilhaft von wenigstens 0,5 mm und/oder eine Länge von höchstens 6 mm und vorteilhaft von höchstens 5 mm auf. Die Höhe des Fixierelements beträgt ab der Mantelfläche des Aufnahmebereichs wenigstens 0,2 mm vorzugsweise wenigstens 0,3 mm und/oder höchstens 1 mm vorzugsweise höchstens 0,6 mm. Besonders vorteilhaft weist die Mundhygienehaltegriffvorrichtung Fixierelemente mit zumindest zwei verschiedenen Abmessungen auf. Es ist auch denkbar, dass alle Fixierelemente der Mundhygienehaltegriffvorrichtung zumindest im Wesentlichen identisch ausgebildet sind. Unter "zumindest im Wesentlichen identischen" Objekten sollen in diesem Zusammenhang insbesondere Objekte verstanden werden, die derart konstruiert sind, dass sie jeweils eine gemeinsame Funktion erfüllen können und sich in ihrer Konstruktion abgesehen von Fertigungstoleranzen höchstens durch einzelne Elemente unterscheiden, die für die gemeinsame Funktion unwesentlich sind. Vorzugsweise ist das Fixierelement als eine Rastnocke ausgebildet. Vorzugsweise weist die Mundhygienehaltegriffvorrichtung eine Mehrzahl von Fixierelementen auf, welche zu einem Fixieren des Mundhygienemittels in der Anwendungsstellung und/oder in der Verstaustellung vorgesehen sind und welche insbesondere in einem Abstand von wenigstens 10 mm und vorteilhaft von wenigstens 20 mm und/oder in einem Abstand von höchstens 40 mm und vorteilhaft von höchstens 30 mm entlang der Haupterstreckungsrichtung des Grundkörpers angeordnet sind. Vorteilhaft sind die Fixierelemente in zumindest einer Gruppe angeordnet, wobei Fixierelemente einer Gruppe insbesondere jeweils in einer Ebene senkrecht zu einer Haupterstreckungsrichtung des Aufnahmebereichs und/oder des Verstaubereichs angeordnet sind. Vorzugsweise weist eine Gruppe von Fixierelementen jeweils zwei Fixierelemente auf, die insbesondere auf einer der Unterseite des Grundkörpers zugewandten Seite des Aufnahmebereichs angeordnet sind. Besonders bevorzugt sind/ist der Aufnahmebereich und/oder der Verstaubereich dazu vorgesehen, das Mundhygienemittel in der Anwendungsstellung und/oder in der Verstaustellung zwischen den Rastnocken einer Gruppe und der Mantelfläche des Aufnahmebereichs und/oder des Verstaubereichs einzuklemmen. Es ist aber auch denkbar, dass eine Gruppe von Fixierelementen jeweils zumindest drei Fixierelemente aufweist. Eine Gruppe von Fixierelementen ist in diesem Fall dazu vorgesehen, das Mundhygienemittel zumindest in einem Bereich alleine zu fixieren, insbesondere berührungsfrei bezüglich der Mantelfläche des Aufnahmebereichs und/oder des Verstaubereichs. Vorteilhaft sind in diesem Fall ferner wenigstens zwei Fixierelemente der Gruppe von Fixierelementen auf einer der Unterseite des Grundkörpers zugewandten Seite des Aufnahmebereichs angeordnet. Ferner ist in diesem Fall vorteilhaft zumindest ein Fixierelement der Gruppe von Fixierelementen auf einer der Unterseite des Grundkörpers abgewandten Seite des Aufnahmebereichs angeordnet. Vorzugsweise weist der Aufnahmebereich in diesem Fall wenigstens zwei Gruppen von Fixierelementen auf. Es ist weiterhin denkbar, dass der Aufnahmebereich eine Mehrzahl von Fixierelementen aufweist, von denen jeweils höchstens zwei in einer gemeinsamen Ebene senkrecht zu der Haupterstreckungsrichtung des Aufnahmebereichs angeordnet sind. Vorteilhaft weist eine Anordnung von Fixierelementen zumindest eine Spiegelsymmetrie auf. Vorzugsweise definieren die Positionen der Fixierelemente Fixierpunkte mit einer festen relativen Position zueinander, an welche eine Geometrie von Mundhygienemitteln, insbesondere von Mundhygienemittelgrundkörpern, anpassbar ist, sodass ein Fixieren des entsprechenden Mundhygienemittels ermöglicht wird, insbesondere zumindest abschnittsweise, vorteilhaft zumindest überwiegend und vorzugsweise vollständig berührungsfrei bezüglich einer Mantelfläche des Aufnahmebereichs und/oder des Verstaubereichs. Besonders vorteilhaft fixieren die Fixierelemente das Mundhygienemittel in einem Bereich des Mundhygienemittelgrundkörpers. Vorteilhaft weist das Mundhygienemittel zumindest einen Querschnitt auf, der zu einem Einklemmen und/oder Fixieren zwischen Fixierelementen und/oder zwischen Fixierelementen und der Mantelfläche des Aufnahmebereichs und/oder des Verstaubereichs vorgesehen ist, welcher eine Erstreckung aufweist, die wenigstens 0,01 mm und besonders vorteilhaft wenigstens 0,05 mm und/oder höchstens 0,5 mm und besonders vorteilhaft höchstens 0,2 mm größer ist als eine Erstreckung eines durch die entsprechenden Fixiermittel und/oder durch die entsprechenden Fixiermittel und die Mantelfläche des Aufnahmebereichs und/oder des Verstaubereichs definierten Querschnitts. Hierdurch kann insbesondere eine vorteilhafte Haltegeometrie für ein Mundhygienemittel bereitgestellt werden. Ferner kann hierdurch eine universelle Haltegeometrie für Mundhygienemittel mit unterschiedlichen Abmessungen bereitgestellt werden.

In einer vorteilhaften Ausgestaltung der Erfindung wird vorgeschlagen, dass der Grundkörper zumindest einen Griffbereich aufweist, der in einer Projektion senkrecht zu einer Haupterstreckungsrichtung des Aufnahmebereichs den Aufnahmebereich zumindest teilweise überlagert. Vorzugsweise ist der Griffbereich dazu vorgesehen, in zumindest einer Anwendungsstellung einem Griffelement des Mundhygienemittels gegenüberliegend angeordnet zu sein. Besonders bevorzugt ist der Griffbereich als eine Fläche und/oder von einer Ausnehmung verschieden ausgebildet. Vorteilhaft weist der Griffbereich zumindest eine Oberflächenstruktur auf, die von einer Oberflächenstruktur zumindest eines anderen Bereichs des Grundkörpers abweicht. Besonders vorteilhaft weist der Griffbereich eine genoppte und/oder geriffelte und/oder texturierte Oberfläche auf. Ferner kann der Griffbereich zumindest eine Weichkomponente aufweisen. Insbesondere weist der Griffbereich eine Fläche von wenigstens 0,5 cm², vorteilhaft von wenigstens 1 cm² und besonders vorteilhaft von wenigstens 1,5 cm² und/oder eine Fläche von höchstens 5 cm², vorteilhaft von höchstens 4 cm² und besonders vorteilhaft von höchstens 3 cm² auf. Vorteilhaft ist eine Haupterstreckungsebene des Griffbereichs zumindest im Wesentlichen parallel zu der Haupterstreckungsrichtung des Grundkörpers angeordnet. Unter einer "Haupterstreckungsebene" eines Objekts soll insbesondere eine Ebene verstanden werden, die parallel zu einer größten Seitenfläche eines kleinsten gedachten Quaders ist, welcher das Objekt gerade noch vollständig umschließt, und die insbesondere durch den Mittelpunkt des Quaders verläuft. Vorzugsweise bildet eine Oberfläche des Griffbereichs zumindest einen Teil einer Oberfläche des Grundkörpers aus. Besonders vorteilhaft ist der Griffbereich einteilig mit dem Grundkörper verbunden. Hierdurch kann vorteilhaft ein hoher Anwendungskomfort und/oder eine verbesserte Handhabbarkeit erzielt werden. Ferner kann ein sicheres und/oder kontrolliertes Halten und/oder Führen der Mundhygienehaltegriffvorrichtung ermöglicht werden.

Neben dem Griffbereich kann die Weichkomponente zusätzliche Pflege- und/oder Reinigungselemente bzw. Pflege- und/oder Reinigungszonen ausbilden. Zusätzliche Pflege- und/oder Reinigungselemente im oder um den Aufnahmebereich der Mundhygienehaltegriffvorrichtung können mit dem auswechselbaren Mundhygienemittel zusammenspielen. Die zusätzlichen Pflege- und/oder Reinigungselemente können aus Hart- und/oder Weichmaterial bestehen. Die zusätzlichen Pflege- und/oder Reinigungselemente können verschiedenste Formen aufweisen, beispielsweise Lamellen und/oder Zylinder und/oder Noppen.

In einer besonders vorteilhaften Ausgestaltung der Erfindung wird vorgeschlagen, dass der Griffbereich dem Aufnahmebereich gegenüberliegend auf der Oberseite des Grundkörpers angeordnet ist. Vorteilhaft ist der Griffbereich in einer Betrachtung senkrecht zu einer Haupterstreckungsrichtung des Grundkörpers neben dem Aufnahmebereich angeordnet. Besonders vorteilhaft bildet eine Rückseite des Griffbereichs zumindest teilweise den Aufnahmebereich und/oder den Verstaubereich aus. Vorteilhaft ist ein System mit der Mundhygienehaltegriffvorrichtung und dem Mundhygienemittel in der Anwendungsstellung dazu vorgesehen, zumindest an dem Griffbereich des Grundkörpers und dem Griffelement des Mundhygienemittels gehalten zu werden, sofern das Mundhygienemittel von einem Wechselteil verschieden ausgebildet ist und/oder ein Griffelement aufweist. Vorzugsweise beträgt ein Abstand zwischen dem Griffbereich des Grundkörpers und dem Reinigungsbereich des Mundhygienemittels weniger als 50 mm, bevorzugt weniger als 40 mm und besonders bevorzugt weniger als 30 mm. Hierdurch kann vorteilhaft eine intuitive Handhabung und/oder ein unmittelbares Führen und/oder ein sicheres Halten eines Mundhygienemittels erzielt werden. Ferner kann vorteilhaft ein Abstand zwischen einem Griffbereich und einem Reinigungsbereich reduziert werden, sodass insbesondere eine verbesserte Kraftübertragung und/oder verbesserte Eigenschaften hinsichtlich einer präzisen Anwendung erzielt werden können.

Außerdem wird vorgeschlagen, dass der Grundkörper zumindest eine dem Aufnahmebereich gegenüberliegend auf einer Oberseite des Grundkörpers angeordnete Zugangsöffnung aufweist, durch welche hindurch der Aufnahmebereich zumindest teilweise zugänglich ist. Vorzugsweise weist die Zugangsöffnung einen zumindest im Wesentlichen elliptischen oder einen zumindest im Wesentlichen kreisförmigen oder einen polygonalen Querschnitt auf. Vorzugsweise ist die Zugangsöffnung in einem Bereich des Aufnahmebereichs angeordnet, der zu einer Aufnahme des Mundhygienemittelgrundkörpers in der Anwendungsstellung und/oder in der Verstaustellung vorgesehen ist, sodass insbesondere zu einer Demontage des Mundhygienemittels das Mundhygienemittel durch die Zugangsöffnung hindurch zumindest teilweise aus dem Aufnahmebereich gedrückt werden kann. Insbesondere weist die Zugangsöffnung eine Länge von wenigstens 5 mm, vorteilhaft von wenigstens 7 mm und besonders vorteilhaft von wenigstens 11 mm und/oder eine Länge von höchstens 20 mm, vorteilhaft von höchstens 15 mm und besonders vorteilhaft von höchstens 13 mm auf. Insbesondere weist die Zugangsöffnung eine Breite von wenigstens 3 mm, vorteilhaft von wenigstens 5 mm und besonders vorteilhaft von wenigstens 7 mm und/oder eine Breite von höchstens 15 mm, vorteilhaft von höchstens 10 mm und besonders vorteilhaft von höchstens 9 mm auf. Vorzugsweise entspricht eine Breite der Zugangsöffnung zumindest im Wesentlichen einer Breite des Aufnahmebereichs an einer Stelle, an welcher der Aufnahmebereich durch die Zugangsöffnung hindurch zumindest teilweise zugänglich ist. Vorteilhaft ist in einer Projektion senkrecht zu der Haupterstreckungsrichtung des Grundkörpers die Zugangsöffnung zumindest teilweise, besonders vorteilhaft zu wenigstens einem Großteil neben dem Griffbereich, insbesondere auf einer der Vorderseite des Grundkörpers abgewandten Seite des Griffbereichs angeordnet. Hierdurch kann vorteilhaft ein hoher Bedienkomfort, insbesondere bei einer Befestigung des Mundhygienemittels an und/oder einem Lösen des Mundhygienemittels von der Mundhygienehaltegriffvorrichtung, erzielt werden.

Ferner wird vorgeschlagen, dass der Grundkörper zumindest einen Handgriffbereich aufweist, der in einer Projektion senkrecht zu einer Haupterstreckungsrichtung des Aufnahmebereichs zumindest teilweise neben dem Aufnahmebereich und vorteilhaft neben dem Verstaubereich angeordnet ist. Vorzugsweise ist der Handgriffbereich auf einer Unterseite des Grundkörpers angeordnet. Besonders vorteilhaft ist der Handgriffbereich auf einer dem Griffbereich abgewandten Seite der Zugangsöffnung angeordnet. Vorteilhaft weist der Handgriffbereich zumindest eine Oberflächenstruktur auf, die von einer Oberflächenstruktur zumindest eines anderen Bereichs des Grundkörpers abweicht. Besonders vorteilhaft weist der Handgriffbereich eine genoppte und/oder geriffelte und/oder texturierte Oberfläche auf. Ferner kann der Handgriffbereich zumindest eine Weichkomponente aufweisen. Insbesondere verläuft eine Haupterstreckungsrichtung des Handgriffbereichs zumindest im Wesentlichen parallel zu der Haupterstreckungsrichtung des Grundkörpers. Vorzugsweise weist der Handgriffbereich eine Länge von wenigstens 10 mm, bevorzugt von wenigstens 20 mm und besonders bevorzugt von wenigstens 30 mm und/oder eine Länge von höchstens 150 mm, bevorzugt von höchstens 100 mm und besonders bevorzugt von höchstens 70 mm auf. Besonders bevorzugt weist der Handgriffbereich eine Breite auf, die wenigstens zu einem Großteil einer Breite des Grundkörpers entspricht. Hierdurch können insbesondere verbesserte Eigenschaften hinsichtlich einer Handhabung und/oder eines Haltens erzielt werden. Ferner kann hierdurch ein hoher Komfort, insbesondere bei einer einhändigen Benutzung, erzielt werden.

In einer vorteilhaften Ausgestaltung der Erfindung wird vorgeschlagen, dass der Aufnahmebereich zu einer Aufnahme des Mundhygienemittels in einer von der Anwendungsstellung verschiedenen weiteren Anwendungsstellung vorgesehen ist. Vorzugsweise unterscheidet sich die weitere Anwendungsstellung von der Anwendungsstellung zumindest hinsichtlich einer Lage des Mundhygienemittels relativ zu dem Grundkörper. Insbesondere kann ein Mundhygienemittel in der weiteren Anwendungsstellung für eine andere Anwendung vorgesehen sein als in der Anwendungsstellung. Hierdurch kann vorteilhaft eine hohe Variabilität erzielt werden. Ferner kann hierdurch ein Nutzungsspektrum vorteilhaft erweitert werden.

In einer besonders vorteilhaften Ausgestaltung der Erfindung wird vorgeschlagen, dass der Aufnahmebereich dazu vorgesehen ist, einen Reinigungsbereich des Mundhygienemittels in der weiteren Anwendungsstellung in einem anderen Winkel relativ zu einer Haupterstreckungsrichtung des Grundkörpers zu lagern als in der Anwendungsstellung, insbesondere in einem Winkel von wenigstens 10°, vorteilhaft von wenigstens 20° und besonders vorteilhaft von wenigstens 30° und/oder in einem Winkel von höchstens 90°, vorteilhaft von höchstens 70° und besonders vorteilhaft von höchstens 60°. Hierdurch können insbesondere vorteilhafte Eigenschaften hinsichtlich einer komfortablen und/oder gründlichen und/oder kontrollierten Anwendung erzielt werden.

In einer bevorzugten Ausgestaltung der Erfindung wird vorgeschlagen, dass das der Aufnahmebereich dazu vorgesehen ist, das Mundhygienemittel in der weiteren Anwendungsstellung an einer anderen Position entlang einer Haupterstreckungsrichtung des Grundkörpers zu lagern als in der Anwendungsstellung, insbesondere an einer Position, die näher an einer Vorderseite des Grundkörpers liegt. Vorteilhaft beträgt ein Abstand entlang der Haupterstreckungsrichtung des Grundkörpers zwischen einer Position des Mundhygienemittels in der Anwendungsstellung und einer Position des Mundhygienemittels in der weiteren Anwendungsstellung wenigstens 1 mm, vorteilhaft wenigstens 2 mm und besonders vorteilhaft wenigstens 3 mm und/oder höchstens 20 mm, vorteilhaft höchstens 10 mm und besonders vorteilhaft höchstens 7 mm. Besonders vorteilhaft ist in der weiteren Anwendungsstellung der Mundhygienemittelgrundkörper zumindest teilweise, bevorzugt zu wenigstens einem Großteil in dem Aufnahmebereich angeordnet. Bevorzugt unterscheidet sich ein Abstand des Reinigungsbereichs des Mundhygienemittels zu dem Grundkörper in der weiteren Anwendungsstellung von einem Abstand des Reinigungsbereichs des Mundhygienemittels zu dem Grundkörper in der Anwendungsstellung insbesondere um wenigstens 1 mm, vorteilhaft um wenigstens 2 mm und besonders vorteilhaft um wenigstens 3 mm. Hierdurch können vorteilhaft Geometrien für verschiedenen Anwendungen angepasst werden.

In einer besonders bevorzugten Ausgestaltung der Erfindung wird vorgeschlagen, dass der Aufnahmebereich zumindest ein, insbesondere weiteres Fixierelement aufweist, welches zu einem zumindest teilweisen Fixieren des Mundhygienemittels in der Anwendungsstellung und in der weiteren Anwendungsstellung vorgesehen ist. Insbesondere kann das Fixierelement zumindest eine der Eigenschaften des oben beschriebenen Fixierelements aufweisen. Hierdurch kann vorteilhaft eine bauliche Einfachheit und/oder eine intuitive Bedienbarkeit erzielt werden.

Darüber hinaus wird vorgeschlagen, dass der Grundkörper zumindest eine, insbesondere von der Zugangsöffnung verschieden ausgebildete Mundhygienemitteldurchführung aufweist, durch welche das Mundhygienemittel in der weiteren Anwendungsstellung zumindest teilweise hindurchtritt. Vorteilhaft ist die Mundhygienemitteldurchführung von einer Vorderseite des Grundkörpers her betrachtet vor dem Griffbereich und/oder vor der Zugangsöffnung und/oder vor dem Handgriffbereich angeordnet. Insbesondere weist die Mundhygienemitteldurchführung eine Länge von wenigstens 3 mm, vorteilhaft von wenigstens 5 mm und besonders vorteilhaft von wenigstens 6 mm und/oder eine Länge von höchstens 15 mm, vorteilhaft von höchstens 10 mm und besonders vorteilhaft von höchstens 8 mm auf. Vorteilhaft ist die Länge der Mundhygienemitteldurchführung um wenigstens 0,5 mm, besonders vorteilhaft um wenigstens 1 mm größer als eine Höhe des Mundhygienemittelgrundkörpers. Besonders vorteilhaft verläuft die Länge der Mundhygienemitteldurchführung zumindest im Wesentlichen parallel zu der Haupterstreckungsrichtung des Grundkörpers. Insbesondere weist die Mundhygienemitteldurchführung eine Breite von wenigstens 5 mm, vorteilhaft von wenigstens 6 mm und besonders vorteilhaft von wenigstens 7 mm und/oder eine Breite von höchstens 15 mm, vorteilhaft von höchstens 10 mm und besonders vorteilhaft von höchstens 9 mm auf. Vorteilhaft entspricht eine Breite der Mundhygienemitteldurchführung zumindest im Wesentlichen einer Breite des Mundhygienemittelgrundkörpers. Vorzugsweise treten in der weiteren Anwendungsstellung der Reinigungsbereich des Mundhygienemittels und insbesondere zumindest ein Teil des Mundhygienemittelgrundkörpers durch die Mundhygienemitteldurchführung hindurch, vorteilhaft vom Aufnahmebereich her, besonders vorteilhaft in Richtung der Oberseite des Grundkörpers. Besonders bevorzugt ist die Mundhygienemitteldurchführung dazu vorgesehen, das Mundhygienemittel in der weiteren Anwendungsstellung zumindest teilweise zu fixieren. Ferner ist denkbar, dass zumindest ein Rand der Mundhygienemitteldurchführung das Mundhygienemittel in der Anwendungsstellung zumindest teilweise fixiert, beispielsweise eben bügelförmig ausgebildet ist. Dabei soll der Rand an der Vorderseite möglichst gering gehalten werden, damit dieser in der Anwendung nicht stört. Vorteilhaft beträgt ein Abstand zwischen einem geometrischen Schwerpunkt der Mundhygienemitteldurchführung und einem geometrischen Schwerpunkt der Zugangsöffnung wenigstens 15 mm, besonders vorteilhaft wenigstens 25 mm und bevorzugt wenigstens 30 mm und/oder höchstens 70 mm, besonders vorteilhaft höchstens 50 mm und bevorzugt höchstens 40 mm, insbesondere entlang der Haupterstreckungsrichtung des Grundkörpers. Vorteilhaft beträgt ein Abstand zwischen dem geometrischen Schwerpunkt der Mundhygienemitteldurchführung und der Vorderseite des Grundkörpers wenigstens 2 mm, besonders vorteilhaft wenigstens 3 mm und bevorzugt wenigstens 5 mm und/oder höchstens 15 mm, besonders vorteilhaft höchstens 10 mm und bevorzugt höchstens 8 mm, insbesondere entlang der Haupterstreckungsrichtung des Grundkörpers. Vorzugsweise besteht eine ordnungsgemäße Montage des Mundhygienemittels in der weiteren Anwendungsstellung aus einem Durchführen zumindest eines Teils, vorteilhaft des Reinigungsbereichs des Mundhygienemittels, besonders bevorzugt vom Aufnahmebereich her, durch die Mundhygienemitteldurchführung und einem vorteilhaft anschließenden Eindrücken und/oder Einlegen des Mundhygienemittelgrundkörpers in den Aufnahmebereich. Hierdurch können insbesondere vorteilhafte Eigenschaften hinsichtlich einer intuitiven Montage eines Mundhygienemittels in verschiedenen Anwendungsstellungen erzielt werden. Ferner kann hierdurch vorteilhaft eine zuverlässige Fixierung des Mundhygienemittels sichergestellt werden.

Ferner wird vorgeschlagen, dass die Mundhygienemitteldurchführung dem Aufnahmebereich gegenüberliegend auf der Oberseite des Grundkörpers angeordnet ist. Besonders bevorzugt ist der Aufnahmebereich zumindest teilweise durch die Mundhygienemitteldurchführung hindurch, insbesondere von der Oberseite des Grundkörpers her, zugänglich. Vorteilhaft bildet eine Rückseite eines Rands der Mundhygienemitteldurchführung zumindest einen Teil des Aufnahmebereichs aus, insbesondere auf einer dem Verstaubereich abgewandten Seite des Aufnahmebereichs. Hierdurch kann vorteilhaft eine Öffnung zur leichten Demontage eines Mundhygienemittels bereitgestellt werden.

In einer weiteren Ausgestaltung der Erfindung wird vorgeschlagen, dass der Aufnahmebereich, vorteilhaft die Mundhygienemitteldurchführung des Aufnahmebereichs, dazu vorgesehen ist, das Mundhygienemittel in der weiteren Anwendungsstellung zumindest teilweise zu verbiegen, vorzugsweise in einem Bereich des Mundhygienemittelgrundkörpers. Es ist aber auch denkbar, dass der Aufnahmebereich dazu vorgesehen ist, das Mundhygienemittel in dem Reinigungsbereich, insbesondere im Bereich einer Befestigung, beispielsweise eines Befestigungsdrahts, des Befestigungselements zumindest teilweise zu verbiegen. Vorteilhaft ist der Aufnahmebereich dazu vorgesehen, einen ersten Bereich des Mundhygienemittels parallel zu der Haupterstreckungsrichtung zu lagern und/oder einen zweiten Bereich des Mundhygienemittels, welcher insbesondere den Reinigungsbereich des Mundhygienemittels zumindest teilweise umfasst, zumindest teilweise zu verbiegen, sodass in der weiteren Anwendungsstellung insbesondere eine Haupterstreckungsrichtung des Reinigungsbereichs mit der Haupterstreckungsrichtung des Grundkörpers einen anderen Winkel einschließt als in der Anwendungsstellung. Insbesondere in dem Fall, dass das Mundhygienemittel in einem Bereich des Reinigungsbereichs geknickt wird, kann der Winkel vorteilhaft zwischen 10° und 75° betragen. Vorzugsweise beträgt ein Abstand zwischen einem vorderen Ende des Reinigungsbereichs und einem Bereich, in welchem das Mundhygienemittel in der weiteren Anwendungsstellung geknickt wird, höchstens 50 mm, vorteilhaft höchstens 40 mm und besonders vorteilhaft höchstens 30 mm. Vorteilhaft beträgt ein Abstand des Bereichs, in welchem das Mundhygienemittel geknickt wird, zu einem dem Reinigungsbereich abgewandten Ende des Mundhygienemittelgrundkörpers wenigstens 50 %, besonders vorteilhaft wenigstens 60 % und vorzugsweise wenigstens 70 % einer Länge des Mundhygienemittelgrundkörpers. Hierdurch können vorteilhafte Eigenschaften hinsichtlich einer schlanken Haltekontur in Kombination mit einer hohen Variabilität in Bezug auf eine Anwendbarkeit erzielt werden.

Vorteilhaft ist der Grundkörper in einem Spritzgussprozess, vorteilhaft ohne Kernzüge, herstellbar und insbesondere entformbar ausgebildet. Insbesondere sind vorteilhaft alle Fixierelemente in einem Bereich der Zugangsöffnung und/oder der Mundhygienemitteldurchführung angeordnet. Es ist denkbar, dass der Aufnahmebereich zumindest eine weitere Zugangsöffnung und/oder zumindest eine weitere Mundhygienemitteldurchführung mit zumindest einer der oben beschriebenen Eigenschaften aufweist. Ferner ist denkbar, dass der Aufnahmebereich kein Fixierelement oder lediglich zwei Fixierelemente aufweist und zu einer Fixierung des Mundhygienemittels auch mittels der Mundhygienemitteldurchführung, insbesondere zusätzlich in der Anwendungsstellung, vorgesehen ist. Weiterhin ist denkbar, dass der Grundkörper zumindest eine Membran, insbesondere aus einem Kunststoff, mit zumindest einer Weichkomponente aufweist, welche die Zugangsöffnung, insbesondere von der Oberseite des Grundkörpers her, zumindest teilweise, vorzugsweise zu wenigstens einem Großteil, abdeckt. Vorteilhaft ist die Membran beschädigungs- oder zerstörungsfrei in Richtung des Aufnahmebereichs verformbar, sodass insbesondere eine Demontage eines in den Aufnahmebereich und/oder in den Verstaubereich eingelegten Mundhygienemittels durch Drücken auf die Membran ermöglicht wird. Die Membrane wird vorzugsweise mit andere Bereichen aus Weichmaterial gebildet.

Darüber hinaus ist denkbar, dass der Aufnahmebereich und/oder der Verstaubereich dazu vorgesehen ist, eine Mehrzahl von insbesondere identischen Mundhygienemitteln aufzunehmen. Beispielsweise können der Aufnahmebereich und der Verstaubereich dazu vorgesehen sein, ein Mundhygienemittel in einer Anwendungsstellung aufzunehmen und zumindest ein weiteres, insbesondere identisches Mundhygienemittel in einer Verstaustellung. Vorzugsweise sind der Aufnahmebereich und der Verstaubereich in diesem Fall dazu vorgesehen, die Mundhygienemittel in einer Betrachtung entlang einer Senkrechten der Haupterstreckungsrichtung des Grundkörpers übereinander zu lagern. Insbesondere kann in diesem Fall eine Höhe und/oder eine Breite und/oder eine Länge des Grundkörpers entsprechend größer sein als oben angegeben. Weiterhin ist denkbar, dass der Grundkörper einen weiteren Aufnahmebereich und/oder einen weiteren Verstaubereich aufweist, der separat zu dem Aufnahmebereich und/oder dem Verstaubereich und insbesondere baulich identisch zu dem Aufnahmebereich und/oder dem Verstaubereich ausgebildet ist. Beispielsweise kann der Grundkörper einen Aufnahmebereich und/oder einen Verstaubereich an der Vorderseite und einen zusätzlichen Aufnahmebereich und/oder einen zusätzlichen Verstaubereich an der Rückseite des Grundkörpers aufweisen. Insbesondere ist denkbar, dass der Grundkörper spiegelsymmetrisch zu einer Ebene ausgebildet ist, die zumindest im Wesentlichen senkrecht zu der Haupterstreckungsrichtung des Grundkörpers verläuft. Es ist aber auch denkbar, dass eine Seite des Grundkörpers zu einer Aufnahme und/oder Verstauung eines ersten Mundhygienemittels und eine zweite Seite des Grundkörpers zu einer Aufnahme und/oder Verstauung eines von dem ersten Mundhygienemittel verschieden ausgebildeten zweiten Mundhygienemittels vorgesehen ist.

Außerdem ist denkbar, dass der Grundkörper zumindest eine Abdeckung aufweist, welche in einem abdeckenden Zustand den Verstaubereich zumindest teilweise abdeckt, insbesondere den zweiten Teilbereich des Verstaubereichs. Vorzugsweise ist die Abdeckung verliersicher mit dem Grundkörper verbunden. Besonders bevorzugt ist die Abdeckung schwenkbar und/oder drehbar und/oder klappbar und/oder schiebbar gelagert und kann insbesondere nach einem Einlegen des Mundhygienemittels in den Verstaubereich in eine Position gebracht werden, die bei einer Betrachtung von der Unterseite des Grundkörpers her vor dem Reinigungsbereich liegt.

Vorteilhafte Eigenschaften hinsichtlich einer komfortablen und/oder sicheren und/oder einfachen Lagerung und/oder Anwendung können insbesondere durch ein System mit zumindest einer Mundhygienehaltegriffvorrichtung und mit zumindest einem Mundhygienemittel erzielt werden. Vorteilhaft beträgt ein Verhältnis der Längen des Mundhygienemittelgrundkörpers und des Grundkörpers wenigstens 1:5, besonders vorteilhaft wenigstens 1:4 und bevorzugt wenigstens 1:3 und/oder höchstens 1:1, besonders vorteilhaft höchstens 2:3 und bevorzugt höchstens 1:2.

Vorteilhafte Eigenschaften hinsichtlich einer vielseitigen Anwendung und/oder eines reduzierten Platzbedarfs können mit einer Zahnbürste mit zumindest einem Borstenfeld und mit zumindest einer erfindungsgemäßen Mundhygienehaltegriffvorrichtung, deren Aufnahmebereich dem Borstenfeld gegenüberliegend angeordnet ist, erzielt werden. Insbesondere weist die Zahnbürste einen Zahnbürstengriff auf, welcher einteilig mit einem Grundkörper der Mundhygienehaltegriffvorrichtung verbunden ist. Vorteilhaft ist das Borstenfeld auf einer anderen Seite des Grundkörpers angeordnet als der Aufnahmebereich der Mundhygienehaltegriffvorrichtung, insbesondere in einer Betrachtung senkrecht zu einer Haupterstreckungsrichtung des Zahnbürstengriffs.

Die Mundhygienehaltegriffvorrichtung wird üblicherweise nicht ohne Mundhygienemittel verkauft. Eine Verkaufseinheit besteht üblicherweise aus einer Mundhygienehaltegriffvorrichtung und einem oder mehreren gleichen oder unterschiedlichen Mundhygienemitteln. Als unterschiedliche Mundhygienemittel werden beispielsweise Interdentalbürsten in verschiedenen Durchmessern oder mit verschiedenen Borstenschnitten verstanden oder auch Interdentalreiniger und Flosser verstanden.

Die Verkaufseinheit kann beispielsweise eine Beutel- und/oder eine Blisterverpackung sein.

Die erfindungsgemäße Mundhygienehaltegriffvorrichtung soll hierbei nicht auf die oben beschriebene Anwendung und Ausführungsform beschränkt sein. Insbesondere kann die erfindungsgemäße Mundhygienehaltegriffvorrichtung zu einer Erfüllung einer hierin beschriebenen Funktionsweise eine von einer hierin genannten Anzahl von einzelnen Elementen, Bauteilen und Einheiten abweichende Anzahl aufweisen.

In den nachfolgend beschriebenen Ausführungsbeispielen sind verschiedene Baueinheiten und/oder Bauteile mehrfach vorhanden. Analog ausgestaltete Bauteile und/oder Baueinheiten, die in den Zeichnungen mit gleichen Bezugszeichen versehen sind, sind zur Vereinfachung in der nachfolgenden Zeichnungsbeschreibung nur einmal beschrieben.

### Zeichnungen

Weitere Vorteile ergeben sich aus der folgenden Zeichnungsbeschreibung. In den Zeichnungen sind sechs Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erste Mundhygienehaltegriffvorrichtung in einer perspektivischen Darstellung,
- Fig. 2: die erste Mundhygienehaltegriffvorrichtung in einer weiteren perspektivischen Darstellung,
- Fig. 3: eine Unterseite der ersten Mundhygienehaltegriffvorrichtung in einer schematischen Darstellung,
- Fig. 4: eine Oberseite der ersten Mundhygienehaltegriffvorrichtung in einer schematischen Darstellung,
- Fig. 5: die erste Mundhygienehaltegriffvorrichtung in einer schematischen Seitenansicht,
- Fig. 6: die erste Mundhygienehaltegriffvorrichtung in einer schematischen Frontalansicht,
- Fig. 7: die erste Mundhygienehaltegriffvorrichtung in einer seitlichen Schnittdarstellung,
- Fig. 8: die erste Mundhygienehaltegriffvorrichtung mit einem in einer Anwendungsstellung eingelegten Mundhygienemittel in einer perspektivischen Darstellung,
- Fig. 9: die erste Mundhygienehaltegriffvorrichtung mit dem in der Anwendungsstellung eingelegten Mundhygienemittel in einer weiteren perspektivischen Darstellung,
- Fig. 10: eine Oberseite der ersten Mundhygienehaltegriffvorrichtung mit dem in der Anwendungsstellung eingelegten Mundhygienemittel in einer schematischen Darstellung,
- Fig. 11: eine Unterseite der ersten Mundhygienehaltegriffvorrichtung mit dem in der Anwendungsstellung eingelegten Mundhygienemittel in einer schematischen Darstellung,
- Fig. 12: die erste Mundhygienehaltegriffvorrichtung mit dem in der Anwendungsstellung eingelegten Mundhygienemittel in einer schematischen Seitenansicht,
- Fig. 13: die erste Mundhygienehaltegriffvorrichtung mit dem in der Anwendungsstellung eingelegten Mundhygienemittel in einer schematischen Frontalansicht,
- Fig. 14: die erste Mundhygienehaltegriffvorrichtung mit dem in der Anwendungsstellung eingelegten Mundhygienemittel in einer seitlichen Schnittdarstellung,
- Fig. 15: die erste Mundhygienehaltegriffvorrichtung mit dem in der Anwendungsstellung eingelegten Mundhygienemittel in einer Schnittdarstellung entlang einer Schnittebene XV-XV der Figur 12,
- Fig. 16: die erste Mundhygienehaltegriffvorrichtung mit dem in der Anwendungsstellung eingelegten Mundhygienemittel in einer Schnittdarstellung entlang einer Schnittebene XVI-XVI der Figur 12,
- Fig. 17: die erste Mundhygienehaltegriffvorrichtung mit dem in einer weiteren Anwendungsstellung eingelegten Mundhygienemittel in einer perspektivischen Darstellung,
- Fig. 18: die erste Mundhygienehaltegriffvorrichtung mit dem in der weiteren Anwendungsstellung eingelegten Mundhygienemittel in einer weiteren perspektivischen Darstellung,
- Fig. 19: eine Oberseite der ersten Mundhygienehaltegriffvorrichtung mit dem in der weiteren Anwendungsstellung eingelegten Mundhygienemittel in einer schematischen Darstellung,
- Fig. 20: eine Unterseite der ersten Mundhygienehaltegriffvorrichtung mit dem in der weiteren Anwendungsstellung eingelegten Mundhygienemittel in einer schematischen Darstellung,
- Fig. 21: die erste Mundhygienehaltegriffvorrichtung mit dem in der weiteren Anwendungsstellung eingelegten Mundhygienemittel in einer schematischen Seitenansicht,
- Fig. 22: die erste Mundhygienehaltegriffvorrichtung mit dem in der weiteren Anwendungsstellung eingelegten Mundhygienemittel in einer schematischen Frontalansicht,
- Fig. 23: die erste Mundhygienehaltegriffvorrichtung mit dem in der weiteren Anwendungsstellung eingelegten Mundhygienemittel in einer seitlichen Schnittdarstellung,
- Fig. 24: die erste Mundhygienehaltegriffvorrichtung mit dem in einer Verstaustellung eingelegten Mundhygienemittel in einer perspektivischen Darstellung,
- Fig. 25: eine Oberseite der ersten Mundhygienehaltegriffvorrichtung mit dem in der Verstaustellung eingelegten Mundhygienemittel in einer schematischen Darstellung,
- Fig. 26: die erste Mundhygienehaltegriffvorrichtung mit dem in der Verstaustellung eingelegten Mundhygienemittel in einer seitlichen Schnittdarstellung,
- Fig. 27: die erste Mundhygienehaltegriffvorrichtung mit dem in der Verstaustellung eingelegten Mundhygienemittel in einer Schnittdarstellung entlang der Schnittebene XXVII-XXVII der Figur 26,
- Fig. 28: eine Unterseite einer zweiten Mundhygienehaltegriffvorrichtung in einer schematischen Darstellung,
- Fig. 29: eine Unterseite einer dritten Mundhygienehaltegriffvorrichtung in einer schematischen Darstellung,
- Fig. 30: eine Unterseite einer vierten Mundhygienehaltegriffvorrichtung in einer schematischen Darstellung,
- Fig. 31: die Unterseite der vierten Mundhygienehaltegriffvorrichtung mit einem in einer Anwendungsstellung eingelegten Mundhygienemittel,
- Fig. 32: eine Unterseite einer fünften Mundhygienehaltegriffvorrichtung in einer schematischen Darstellung,
- Fig. 33: die Unterseite der fünften Mundhygienehaltegriffvorrichtung mit einem in einer Anwendungsstellung eingelegten Mundhygienemittel und
- Fig. 34: eine Unterseite einer sechsten Mundhygienehaltegriffvorrichtung mit zwei verschieden ausgebildeten Mundhygienemitteln in einer schematischen Darstellung.
- Fig. 35: Fig. 35 eine Seitenansicht einer siebten Mundhygienehaltegriffvorrichtung mit einem in einer Anwendungsstellung eingelegten Mundhygienemittel.

### Beschreibung der Ausführungsbeispiele

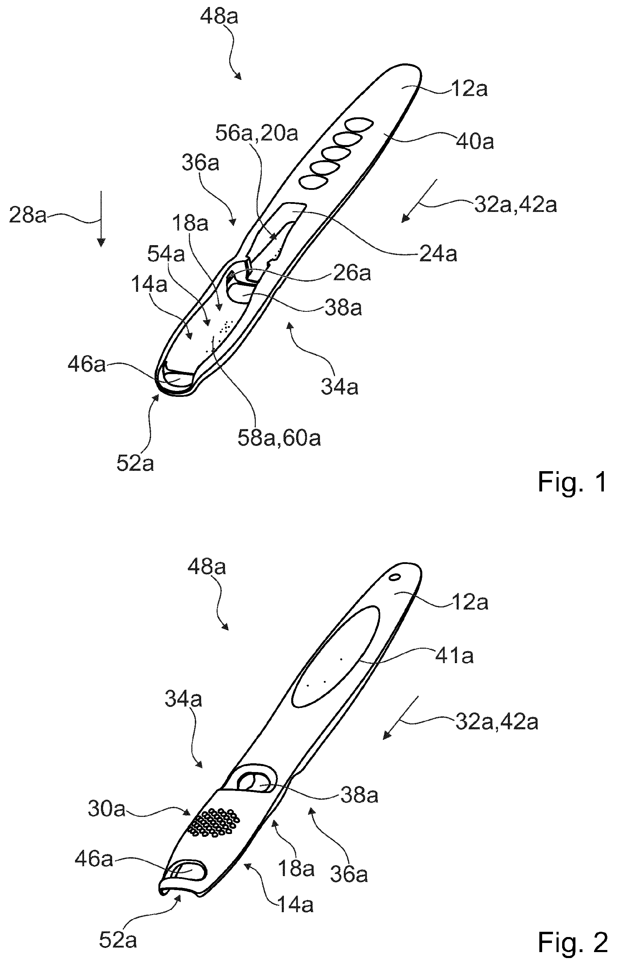

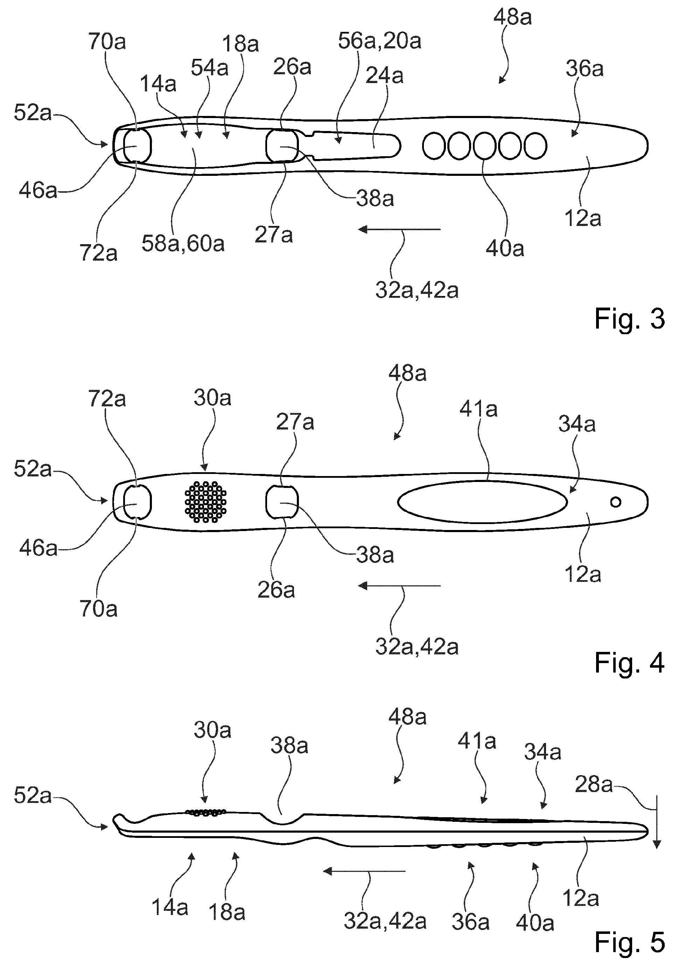

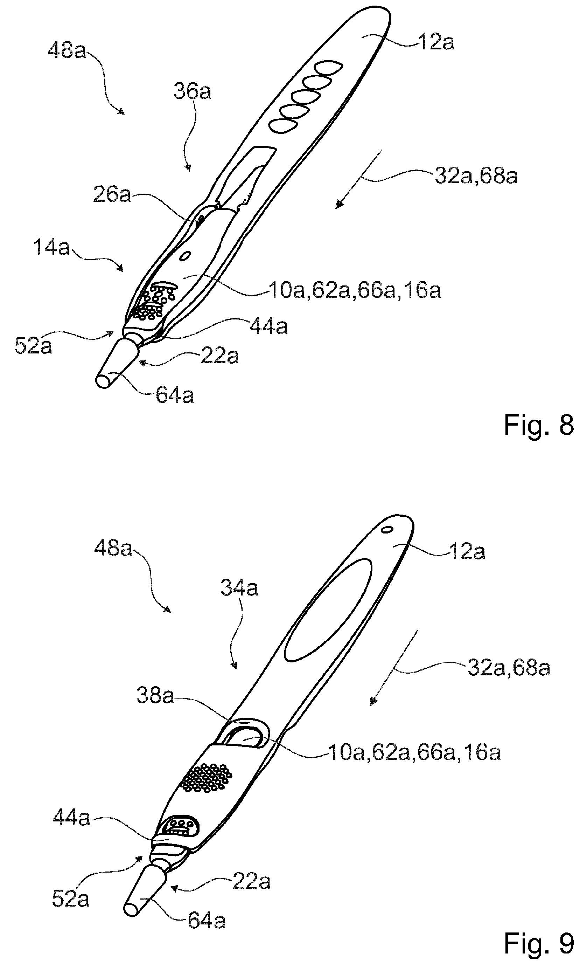

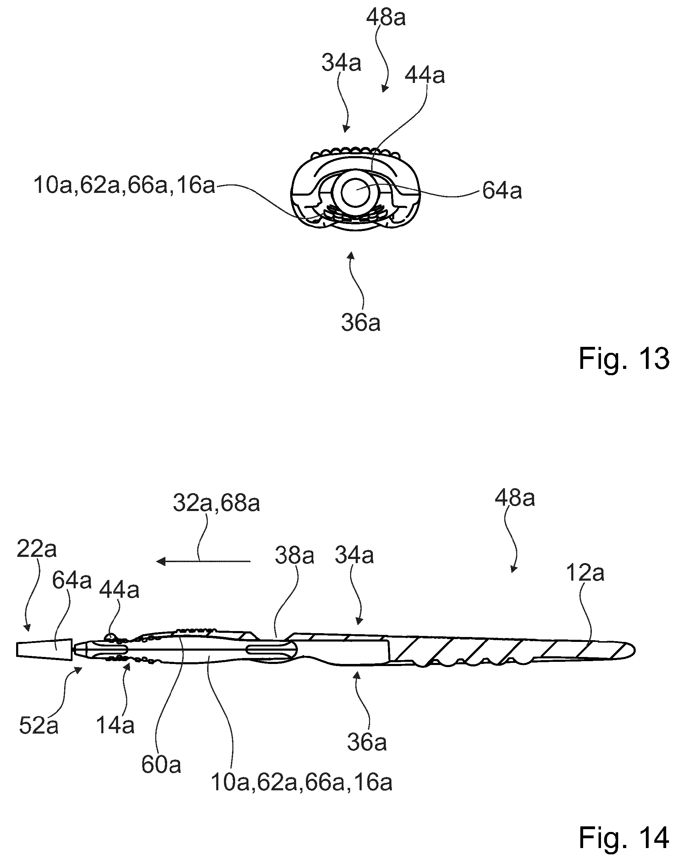

Die Figuren 1 bis 7 zeigen verschiedene Darstellungen einer ersten Mundhygienehaltegriffvorrichtung 48a. Die Mundhygienehaltegriffvorrichtung 48a ist zu einem Halten eines Mundhygienemittels 10a vorgesehen. Die Mundhygienehaltegriffvorrichtung 48a weist zumindest einen Grundkörper 12a mit zumindest einem Aufnahmebereich 14a zur Aufnahme des Mundhygienemittels 10a in einer Anwendungsstellung auf (vgl. auch Figuren 8 bis 16). Der Aufnahmebereich 14a ist länger als 30 mm. Im vorliegenden Fall weist der Aufnahmebereich 14a eine Länge von etwa 45 mm auf. Der Aufnahmebereich 14a ist zu einer Aufnahme eines Griffelements 16a des Mundhygienemittels 10a vorgesehen (vgl. auch Figuren 8 bis 16). Im vorliegenden Fall erstreckt sich eine Länge des Aufnahmebereichs 14a parallel zu einer Haupterstreckungsrichtung 32a des Aufnahmebereichs 14a. Im vorliegenden Fall verläuft die Haupterstreckungsrichtung 32a des Aufnahmebereichs 14a parallel zu einer Haupterstreckungsrichtung 42a des Grundkörpers 12a. Der Grundkörper 12a weist eine Oberseite 34a auf. Der Grundkörper 12a weist eine insbesondere der Oberseite 34a gegenüberliegende Unterseite 36a auf. Der Aufnahmebereich 14a ist auf der Unterseite 36a des Grundkörpers 12a angeordnet. Der Aufnahmebereich 14a ist zu einer Vorderseite 52a des Grundkörpers hin geöffnet.

Der Grundkörper 12a weist zumindest einen Verstaubereich 18a auf, der zur Aufnahme des Mundhygienemittels 10a in einer Verstaustellung vorgesehen ist. Der Aufnahmebereich 14a bildet den Verstaubereich 18a teilweise aus. Es ist aber auch denkbar, dass der Aufnahmebereich 14a den Verstaubereich 18a komplett ausbildet und/oder dass der Aufnahmebereich 14a und der Verstaubereich 18a identisch ausgebildet sind. Im vorliegenden Fall sind der Aufnahmebereich 14a und der Verstaubereich 18a einteilig verbunden. Ferner sind im vorliegenden Fall der Aufnahmebereich 14a und der Verstaubereich 18a als eine gemeinsame Ausnehmung des Grundkörpers 12a ausgebildet. Der Verstaubereich 18a weist einen ersten Teilbereich 54a und einen zweiten Teilbereich 56a auf. Der erste Teilbereich 54a wird von dem Aufnahmebereich 14a ausgebildet. Der zweite Teilbereich 56a ist zu einer Aufnahme eines Reinigungsbereichs 22a des Mundhygienemittels 10a vorgesehen (vgl. auch Figuren 8 bis 16). Der Verstaubereich 18a weist auf einer dem Aufnahmebereich 14a abgewandten Seite 20a einen kleineren Querschnitt auf als der Aufnahmebereich 14a. Im vorliegenden Fall weist der zweite Teilbereich 56a des Verstaubereichs 18a einen kleineren Querschnitt auf als der Aufnahmebereich 14a.

Der Aufnahmebereich 14a weist zumindest ein Fixierelement 26a auf, welches zu einem zumindest teilweisen Fixieren des Mundhygienemittels 10a in der Anwendungsstellung und in der Verstaustellung vorgesehen ist. Das Fixierelement 26a ist als eine Erhebung ausgebildet, die sich entlang zumindest einer Richtung 28a über höchstens 10 % einer Erstreckung des Grundkörpers 12a entlang der Richtung 28a erstreckt. Im vorliegenden Fall verläuft die Richtung 28a senkrecht zu der Haupterstreckungsrichtung 42a des Grundkörpers. Ferner verläuft im vorliegenden Fall die Richtung 28a zumindest im Wesentlichen senkrecht zu der Oberseite 34a des Grundkörpers. Im vorliegenden Fall ist das Fixierelement 26a als eine Rastnocke ausgebildet. Das Fixierelement 26a weist entlang der Haupterstreckungsrichtung 42a des Grundkörpers 12a eine größere Erstreckung auf als entlang der Richtung 28a. Es ist aber auch denkbar, dass das Fixierelement 26a einen quadratischen oder kreisförmigen Querschnitt aufweist. Im vorliegenden Fall weist der Aufnahmebereich ein zu dem Fixierelement 26a spiegelsymmetrisch ausgebildetes zweites Fixierelement 27a auf. Das zweite Fixierelement 27a ist auf einer dem Fixierelement 26a gegenüberliegenden Seite des Aufnahmebereichs 14a angeordnet.

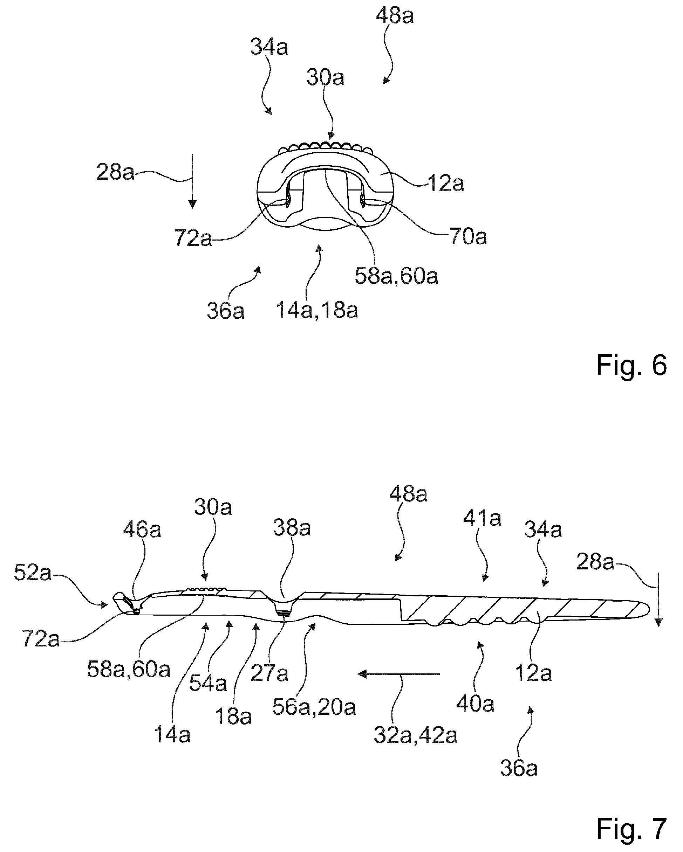

Der Grundkörper 12a weist zumindest einen Griffbereich 30a auf, der in einer Projektion senkrecht zu der Haupterstreckungsrichtung 32a des Aufnahmebereichs 14a und insbesondere parallel zu der Richtung 28a den Aufnahmebereich 14a zumindest teilweise überlagert. Wie insbesondere in der Figur 7 gezeigt wird, ist der Griffbereich 30a dem Aufnahmebereich 14a gegenüberliegend auf der Oberseite 34a des Grundkörpers 12a angeordnet. Im vorliegenden Fall ist der Griffbereich 30a einteilig mit dem Grundkörper 12a verbunden. Ferner ist der Griffbereich 30a als ein genoppter Griff ausgebildet. Eine Rückseite 58a des Griffbereichs 30a bildet zumindest teilweise den Aufnahmebereich 14a aus, insbesondere eine Mantelfläche 60a des Aufnahmebereichs 14a.

Der Grundkörper 12a weist zumindest eine dem Aufnahmebereich 14a gegenüberliegend auf der Oberseite 34a des Grundkörpers 12a angeordnete Zugangsöffnung 38a auf, durch welche hindurch der Aufnahmebereich 14a zumindest teilweise zugänglich ist. Die Zugangsöffnung 38a ist von der Vorderseite 52a des Grundkörpers 12a her betrachtet hinter dem Griffbereich 30a angeordnet. Die Zugangsöffnung 38a ist einteilig mit dem Griffbereich 30a verbunden. Das Fixierelement 26a ist entlang der Haupterstreckungsrichtung 42a des Grundkörpers 12a an einer Position angeordnet, die höchstens 5 mm von der Zugangsöffnung 38a entfernt und insbesondere in einem Bereich der Zugangsöffnung 38a liegt. Insbesondere ist das Fixierelement 26a durch die Zugangsöffnung 38a von der Oberseite 34a des Grundkörpers 12a her zugänglich. Gleiches gilt für das zweite Fixierelement 27a.

Der Grundkörper 12a weist zumindest einen Handgriffbereich 40a auf, der in einer Projektion senkrecht zu der Haupterstreckungsrichtung 32a des Aufnahmebereichs 14a zumindest teilweise neben dem Aufnahmebereich 14a angeordnet ist. Der Handgriffbereich 40a ist auf der Unterseite 36a des Grundkörpers 12a angeordnet. Der Handgriffbereich 40a ist von der Vorderseite 52a des Grundkörpers 12a her betrachtet hinter dem Aufnahmebereich 14a angeordnet. Der Handgriffbereich 40a ist als ein geriffelter Griff ausgebildet. Im vorliegenden Fall weist der Grundkörper 12a einen zweiten Handgriffbereich 41 a auf. Der zweite Handgriffbereich 41 a ist dem Handgriffbereich 40a gegenüberliegend angeordnet, insbesondere in einer Betrachtung senkrecht zu der Haupterstreckungsrichtung 42a. Der Handgriffbereich 40a und der zweite Handgriffbereich 41 a bilden einen gemeinsamen Griff aus, der zu einem Halten mit einer Hand vorgesehen ist, insbesondere zumindest teilweise mit einem Handballen.

Die Figuren 8 bis 14 zeigen verschiedene Darstellungen eines Systems mit der ersten Mundhygienehaltegriffvorrichtung 48a und mit dem in einer Anwendungsstellung eingelegten Mundhygienemittel 10a. Das Mundhygienemittel 10a weist einen Mundhygienemittelgrundkörper 62a auf. Der Mundhygienemittelgrundkörper 62a weist einen Griffbereich 66a auf, der zu einem Halten des Mundhygienemittels 10a in einer alternativen Anwendung, insbesondere ohne die Mundhygienehaltegriffvorrichtung 48a, vorgesehen ist. Das Mundhygienemittel 10a, insbesondere der Mundhygienemittelgrundkörper 62a, weist das Griffelement 16a mit einer Länge von wenigstens 30 mm auf. Im vorliegenden Fall weist das Griffelement 16a eine Länge von etwa 45 mm auf. Ferner weist das Mundhygienemittel 10a den Reinigungsbereich 22a mit einem Reinigungselement 64a auf. Das Reinigungselement 64a ist im vorliegenden Fall als ein Interdentalbürstenkopf ausgebildet. Das Reinigungselement 64a ist mit dem Mundhygienemittelgrundkörper 62a verbunden.

In der Anwendungsstellung ist der Mundhygienemittelgrundkörper 62a des Mundhygienemittels 10a in den Aufnahmebereich 14a des Grundkörpers 12a eingelegt. Eine Haupterstreckungsrichtung 68a des Mundhygienemittels 10a verläuft in der Anwendungsstellung zumindest im Wesentlichen parallel zu der Haupterstreckungsrichtung 42a des Grundkörpers 12a. Das Mundhygienemittel 10a wird in der Anwendungsstellung von dem Fixierelement 26a zumindest teilweise fixiert. Das Mundhygienemittel 10a wird in der Anwendungsstellung ferner von dem zweiten Fixierelement 27a zumindest teilweise fixiert. Das Mundhygienemittel 10a wird in der Anwendungsstellung ferner von einem dritten Fixierelement 70a zumindest teilweise fixiert. Das Mundhygienemittel 10a wird in der Anwendungsstellung außerdem von einem vierten Fixierelement 72a zumindest teilweise fixiert. Die Fixierelemente 26a, 27a, 70a, 72a sowie die Mantelfläche 60a des Aufnahmebereichs 14a fixieren den Mundhygienemittelgrundkörper 62a in der Anwendungsstellung. Es ist aber auch denkbar, dass ein Mundhygienemittel in einer Anwendungsstellung und/oder in einer Verstaustellung lediglich von Fixierelementen fixiert wird, insbesondere ansonsten berührungsfrei bezüglich einer Mantelfläche eines Aufnahmebereichs. Der Reinigungsbereich 22a des Mundhygienemittels 10a ragt in der Anwendungsstellung über die Vorderseite 52a des Grundkörpers 12a hinaus.

Zu einem Einlegen des Mundhygienemittels 10a in den Aufnahmebereich 14a des Grundkörpers 12a kann das Mundhygienemittel 10a senkrecht zu der Haupterstreckungsrichtung 42a des Grundkörpers 12a in den Aufnahmebereich 14a eingeführt werden. Bei dem Einlegen verrastet das Mundhygienemittel 10a mit dem Fixierelement 26a und insbesondere mit den Fixierelementen 27a, 70a, 72a. Zu einer Demontage des Mundhygienemittels 10a kann das Mundhygienemittel 10a durch die Zugangsöffnung 38a des Aufnahmebereichs 14a, insbesondere von der Oberseite 34a des Grundkörpers 12a her, in Richtung der Unterseite 36a des Grundkörpers 12a aus dem Aufnahmebereich 14a herausgedrückt werden.

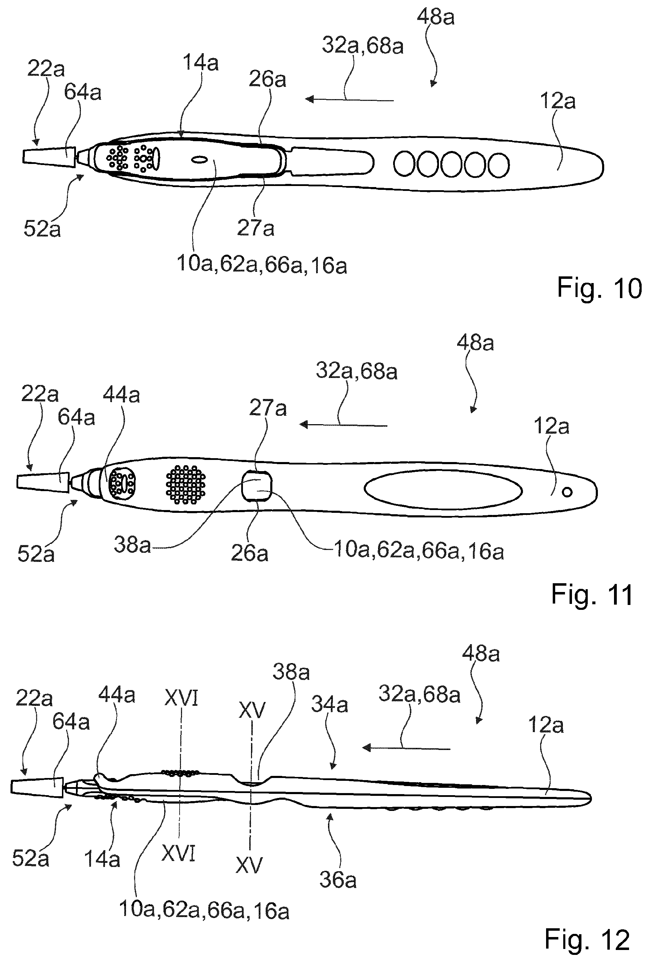

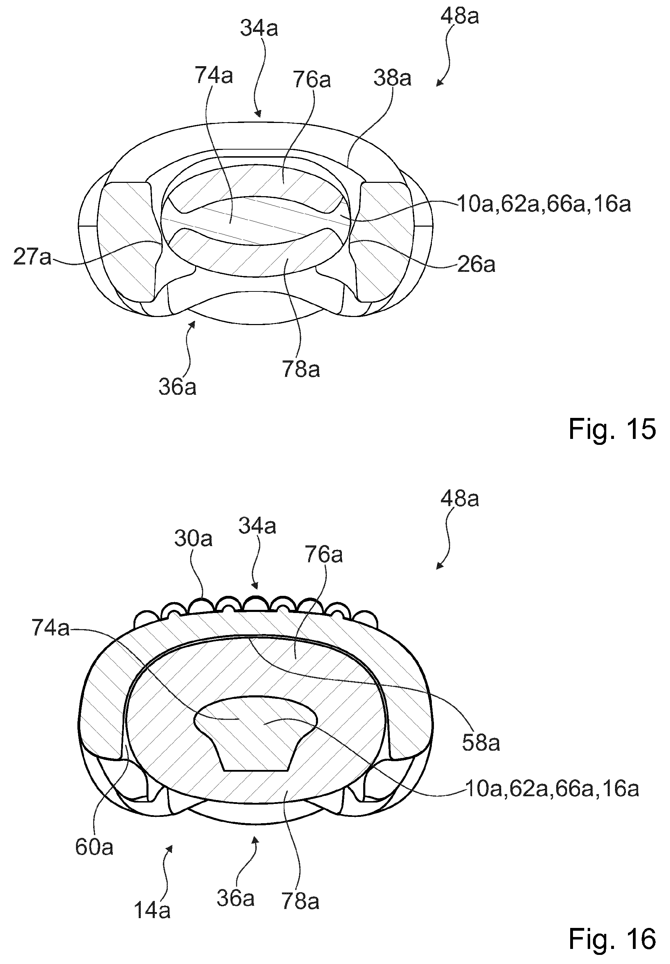

Die Figur 15 zeigt die erste Mundhygienegriffvorrichtung 48a mit dem in der Anwendungsstellung eingelegten Mundhygienemittel 10a in einer Schnittdarstellung entlang einer Schnittebene XV-XV in der Figur 12. Der Mundhygienemittelgrundkörper 62a des Mundhygienemittels 10a wird von den beiden Fixierelementen 26a, 27a in einem Bereich der Zugangsöffnung 38a zumindest teilweise fixiert. Der Mundhygienemittelgrundkörper 62a weist in einem zentralen Bereich 74a eine Hartkomponente auf. Ferner weist der Mundhygienemittelgrundkörper 62a in einem oberen Griffbereich 76a und in einem unteren Griffbereich 78a jeweils eine Weichkomponente auf. In der Anwendungsstellung ist der obere Griffbereich 76a des Mundhygienemittelgrundkörpers 62a der Oberseite 34a des Grundkörpers 12a der Mundhygienehaltegriffvorrichtung 48a zugewandt. Ferner ist in der Anwendungsstellung der untere Griffbereich 78a des Mundhygienemittelgrundkörpers 62a der Unterseite 36a des Grundkörpers 12a zugewandt.

Die Figur 16 zeigt die erste Mundhygienegriffvorrichtung 48a mit dem in der Anwendungsstellung eingelegten Mundhygienemittel 10a in einer Schnittdarstellung entlang einer Schnittebene XVI-XVI in der Figur 12. Der obere Griffbereich 76a und der untere Griffbereich 78a des Mundhygienemittelgrundkörpers 10a sind einteilig verbunden. Der obere Griffbereich 76a und der untere Griffbereich 78a des Mundhygienemittelgrundkörpers 10a umgeben den zentralen Bereich 74a zumindest abschnittsweise vollständig.

Eine Form des Aufnahmebereichs 14a des Grundkörpers 12a ist, insbesondere auf einer dem Griffbereich 30a gegenüberliegenden Rückseite 58a des Griffbereichs 30a, einer Form des Mundhygienemittels 10a, insbesondere des Mundhygienemittelgrundkörpers 62a, angepasst. Ein Querschnitt der Mantelfläche 60a des Aufnahmebereichs 14a umgibt einen Querschnitt des Mundhygienemittelgrundkörpers 62a. Der Mundhygienemittelgrundkörper 62a ist in der Anwendungsstellung zumindest abschnittsweise formschlüssig in den Aufnahmebereich 14a eingelegt.

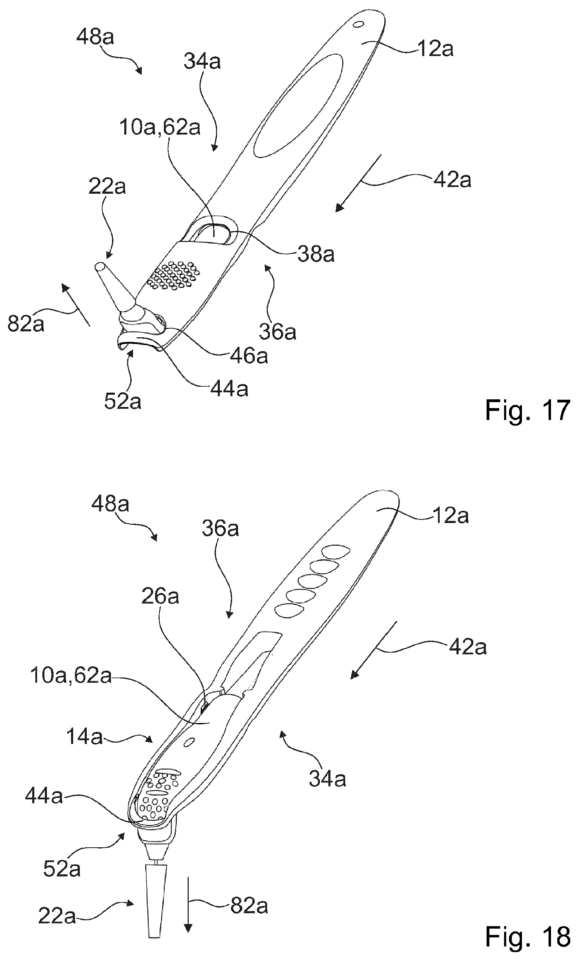

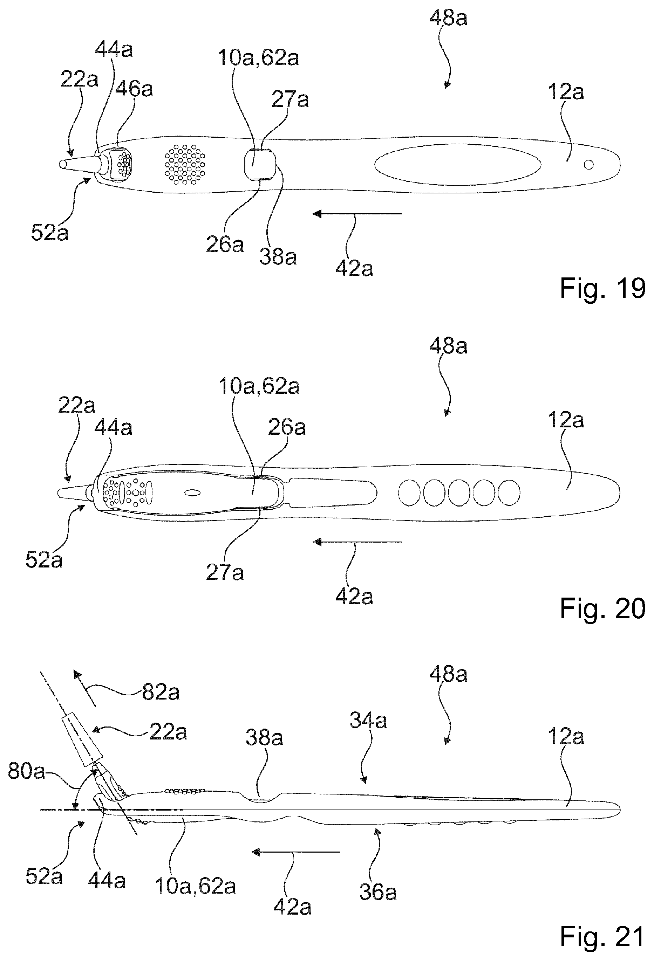

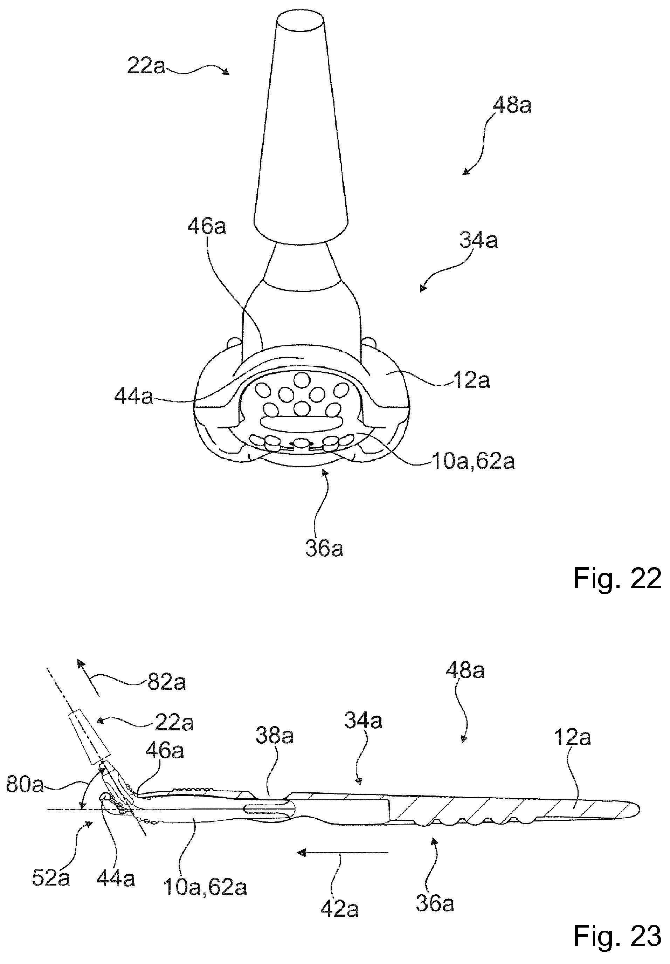

Die Figuren 17 bis 23 zeigen verschiedene Darstellungen der ersten Mundhygienehaltegriffvorrichtung 48a mit dem in einer weiteren Anwendungsstellung eingelegten Mundhygienemittel 10a. Der Aufnahmebereich 14a des Grundkörpers 12a der Mundhygienegriffvorrichtung 48a ist zu einer Aufnahme des Mundhygienemittels 10a in der weiteren Anwendungsstellung vorgesehen. Die weitere Anwendungsstellung ist von der Anwendungsstellung verschieden. In der weiteren Anwendungsstellung ist der Mundhygienemittelgrundkörper 62a des Mundhygienemittels 10a teilweise in den Aufnahmebereich 14a des Grundkörpers 12a eingelegt.

Der Aufnahmebereich 14a ist dazu vorgesehen, den Reinigungsbereich 22a des Mundhygienemittels 10a in der weiteren Anwendungsstellung in einem anderen Winkel 80a relativ zu der Haupterstreckungsrichtung 42a des Grundkörpers 12a zu lagern als in der Anwendungsstellung. Im vorliegenden Fall beträgt der Winkel 80a etwa 60°. Eine Haupterstreckungsrichtung 82a des Reinigungsbereichs 22a schließt mit der Haupterstreckungsrichtung 42a des Grundkörpers 12a den Winkel 80a ein.

Der Aufnahmebereich 14a ist dazu vorgesehen, das Mundhygienemittel 10a in der weiteren Anwendungsstellung an einer anderen Position entlang der Haupterstreckungsrichtung 42a des Grundkörpers 12a zu lagern als in der Anwendungsstellung. Im vorliegenden Fall ist das Mundhygienemittel 10a in der weiteren Anwendungsstellung näher an der Vorderseite 52a des Grundkörpers 12a angeordnet als in der Anwendungsstellung. Es ist aber auch denkbar, dass ein Mundhygienemittel in zwei verschiedenen Anwendungsstellungen jeweils an derselben Position entlang einer Haupterstreckungsrichtung eines Grundkörpers gelagert wird, wobei insbesondere ein Reinigungsbereich mit einer Haupterstreckungsrichtung des Grundkörpers in den beiden Anwendungsstellungen unterschiedliche Winkel einschließt.

Der Aufnahmebereich 14a weist ein Fixierelement 44a auf, welches zu einem zumindest teilweisen Fixieren des Mundhygienemittels 10a in der Anwendungsstellung und in der weiteren Anwendungsstellung vorgesehen ist. Im vorliegenden Fall ist das Fixierelement 44a bügelförmig ausgebildet. Eine Form des Fixierelements 44a ist zumindest teilweise an eine Form des Mundhygienemittelgrundkörpers 62a angepasst. Das Fixierelement 44a umschließt das Mundhygienemittel 10a in der Anwendungsstellung und in der weiteren Anwendungsstellung abschnittsweise. Ferner ist das Fixierelement 26a zu einem zumindest teilweisen Fixieren des Mundhygienemittels 10a in der Anwendungsstellung und in der weiteren Anwendungsstellung vorgesehen. Außerdem fixiert das Fixierelement 27a das Mundhygienemittel 10a in der Anwendungsstellung und in der weiteren Anwendungsstellung zumindest teilweise. Alternativ oder zusätzlich ist denkbar, dass der Aufnahmebereich 14a zumindest ein als Rastnocke ausgebildetes Fixierelement aufweist, welches das Mundhygienemittel in mehreren Anwendungsstellungen fixiert.

Der Grundkörper 12a weist zumindest eine Mundhygienemitteldurchführung 46a auf, durch welche das Mundhygienemittel 10a in der weiteren Anwendungsstellung zumindest teilweise hindurchtritt. Im vorliegenden Fall tritt in der weiteren Anwendungsstellung der Reinigungsbereich 22a des Mundhygienemittels 10a durch die Mundhygienemitteldurchführung 46a hindurch. Ferner tritt in der weiteren Anwendungsstellung der Mundhygienemittelgrundkörper 62a zumindest teilweise durch die Mundhygienemitteldurchführung 46a hindurch. Die Mundhygienemitteldurchführung 46a ist dem Aufnahmebereich 14a gegenüberliegend auf der Oberseite 34a des Grundkörpers 12a angeordnet. Der Aufnahmebereich 14a, insbesondere die Mundhygienemitteldurchführung 46a, ist dazu vorgesehen, das Mundhygienemittel 10a, insbesondere den Mundhygienemittelgrundkörper 62a, in der weiteren Anwendungsstellung zumindest teilweise zu verbiegen. Zu einem Einlegen des Mundhygienemittels 10a in den Aufnahmebereich 14a der weiteren Anwendungsstellung wird der Reinigungsbereich 22a des Mundhygienemittels 10a von der Unterseite 36a des Grundkörpers 12a her durch die Mundhygienemitteldurchführung 46a geschoben. Anschließend wird der Mundhygienemittelgrundkörper 62a an den Fixierelementen 26a, 27a vorbeigedrückt. Der Mundhygienemittelgrundkörper 62a wird daraufhin in den Aufnahmebereich 14a eingelegt. Zu einer Demontage des Mundhygienemittels 10a kann das Mundhygienemittel 10a durch die Zugangsöffnung 38a des Aufnahmebereichs 14a, insbesondere von der Oberseite 34a des Grundkörpers 12a her, in Richtung der Unterseite 36a des Grundkörpers 12a aus dem Aufnahmebereich 14a herausgedrückt werden. Anschließend kann das Mundhygienemittel 10a aus der Mundhygienemitteldurchführung 46a in Richtung der Unterseite 36a des Grundkörpers 12a herausgezogen werden.

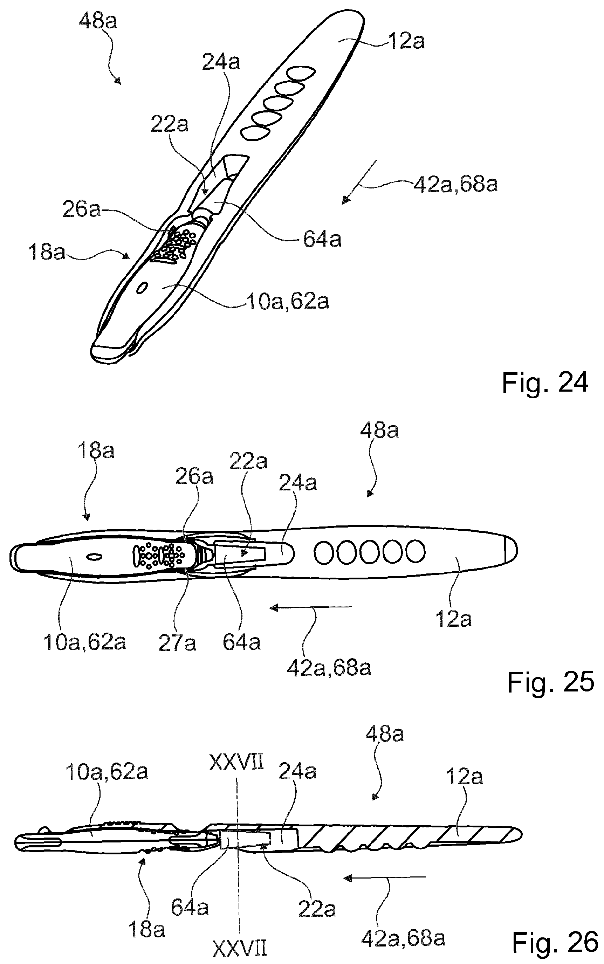

Die Figuren 24 bis 27 zeigen die erste Mundhygienehaltegriffvorrichtung 48a mit dem in einer Verstaustellung eingelegten Mundhygienemittel 10a in verschiedenen Darstellungen. In der Verstaustellung ist das Mundhygienemittel 10a in dem Verstaubereich 18a des Grundkörpers 12a angeordnet. Der Reinigungsbereich 22a des Mundhygienemittels 10a ist in der Verstaustellung in dem zweiten Teilbereich 56a des Verstaubereichs 18a angeordnet. Das Fixierelement 26a ist dazu vorgesehen, das Mundhygienemittel 10a, insbesondere den Mundhygienemittelgrundkörper 62a, in der Anwendungsstellung und in der Verstaustellung zumindest teilweise zu fixieren. Gleiches gilt für das Fixierelement 27a. In der Verstaustellung verläuft die Haupterstreckungsrichtung 68a des Mundhygienemittels 10a zumindest im Wesentlichen parallel zu der Haupterstreckungsrichtung 42a des Grundkörpers 12a der Mundhygienehaltegriffvorrichtung 48a.

Der Verstaubereich 18a ist dazu vorgesehen, den Reinigungsbereich 22a des Mundhygienemittels 10a berührungsfrei zu lagern. In der Verstaustellung ist der Reinigungsbereich 22a des Mundhygienemittels 10a berührungsfrei in dem zweiten Teilbereich 56a des Verstaubereichs 18a angeordnet. Ein minimaler Abstand zwischen dem Reinigungsbereich 22a des Mundhygienemittels 10a, insbesondere zwischen dem Reinigungselement 64a des Mundhygienemittels 10a und dem Verstaubereich 18a, beträgt im vorliegenden Fall zwischen 0,1 mm und 0,5 mm.

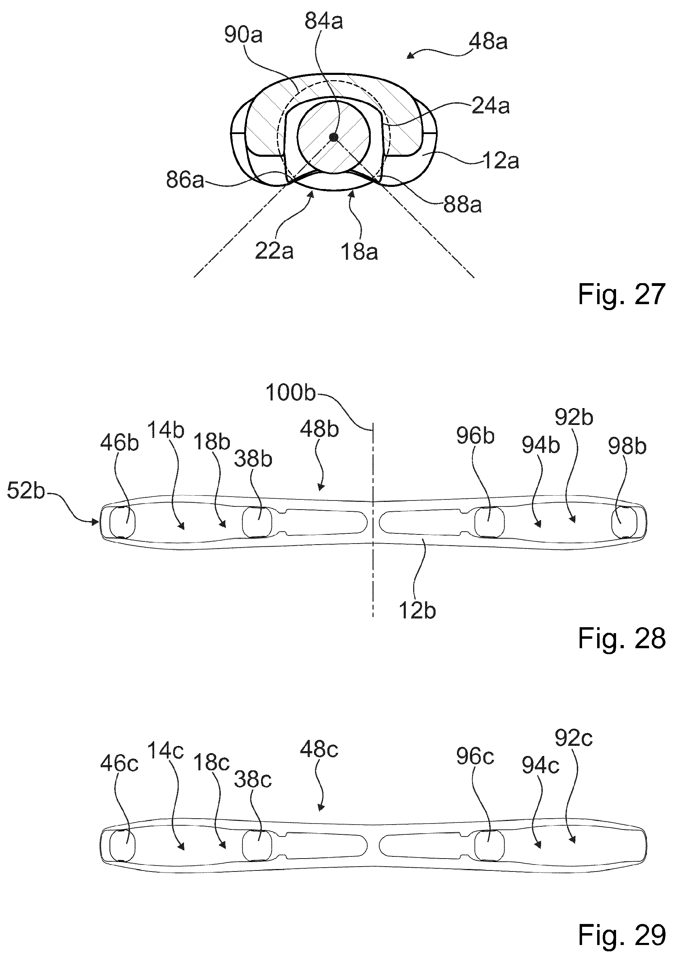

Der Verstaubereich 18a weist eine Mantelfläche 24a auf, welche den Reinigungsbereich 22a des Mundhygienemittels 10a in zumindest einer Schnittebene, insbesondere in der in der Figur 27 dargestellten und in der Figur 26 als XXVII-XXVII eingezeichneten Schnittebene, senkrecht zu einer Haupterstreckungsrichtung 42a des Grundkörpers 12a über einen Winkelbereich von mehr als 180° umgibt. Insbesondere schließt eine Zentralachse 84a des Reinigungsbereichs 22a mit der Oberseite 34a des Grundkörpers 12a entferntesten Punkten 86a, 88a der Mantelfläche 24a des Verstaubereichs 18a einen Winkel 90a ein, der größer als 180° ist.

In den Figuren 28 bis 34 sind sechs weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 27, verwiesen werden kann. Zur Unterscheidung der Ausführungsbeispiele ist der Buchstabe a den Bezugszeichen des Ausführungsbeispiels in den Figuren 1 bis 27 nachgestellt. In den Ausführungsbeispielen der Figuren 28 bis 34 ist der Buchstabe a durch die Buchstaben b bis g ersetzt.

Die Figur 28 zeigt eine Unterseite 36b einer zweiten Mundhygienehaltegriffvorrichtung 48b in einer schematischen Darstellung. Die Mundhygienehaltegriffvorrichtung 48b weist einen Grundkörper 12b mit einem ersten Aufnahmebereich 14b auf. Der Grundkörper 12b weist einen ersten Verstaubereich 18b auf. Der erste Verstaubereich 18b ist einteilig mit dem ersten Aufnahmebereich 14b verbunden. Der Aufnahmebereich 14b und der Verstaubereich 18b sind wie in dem Ausführungsbeispiel der Figuren 1 bis 27 beschrieben ausgebildet. Insbesondere weist der erste Aufnahmebereich 14b eine erste Zugangsöffnung 38b sowie eine erste Mundhygienemitteldurchführung 46b auf. Der Grundkörper 12b weist einen zweiten Aufnahmebereich 92b auf. Ferner weist der Grundkörper 12b einen zweiten Verstaubereich 94b auf. Der zweite Aufnahmebereich 92b und der zweite Verstaubereich 94b sind analog zu dem ersten Aufnahmebereich 14b und dem ersten Verstaubereich 18b ausgebildet. Insbesondere weist der zweite Aufnahmebereich 92b eine zweite Zugangsöffnung 96b sowie eine zweite Mundhygienemitteldurchführung 98b auf. Der zweite Aufnahmebereich 92b und der zweite Verstaubereich 94b sind von einer Vorderseite 52b des Grundkörpers 12b her betrachtet hinter dem ersten Aufnahmebereich 14b und dem ersten Verstaubereich 18b angeordnet. Der Grundkörper 12b ist bezüglich einer Ebene 100b im vorliegenden Fall spiegelsymmetrisch ausgebildet. Es ist aber auch möglich die Bereiche nicht genau spiegelsymmetrisch auszubilden und insbesondere durch die unterschiedliche Positionierung der Mundhygienemitteldurchführungen 46b und 98b gegenüber dem jeweiligen Ende verschiedene Winkel der Anwendung zu erreichen.

Die Figur 29 zeigt eine Unterseite 36c einer dritten Mundhygienehaltegriffvorrichtung 48c in einer schematischen Darstellung. Die dritte Mundhygienehaltegriffvorrichtung 48c weist einen ersten Aufnahmebereich 14c sowie einen ersten Verstaubereich 18c auf. Der erste Aufnahmebereich 14c weist eine erste Zugangsöffnung 38c sowie eine erste Mundhygienemitteldurchführung 46c auf. Ferner weist die dritte Mundhygienehaltegriffvorrichtung 48c einen zweiten Aufnahmebereich 92c sowie einen zweiten Verstaubereich 94c auf. Der zweite Aufnahmebereich 92c weist eine zweite Zugangsöffnung 96c auf. Die dritte Mundhygienehaltegriffvorrichtung 48c ist grundsätzlich analog zu der zweiten Mundhygienehaltegriffvorrichtung 48b aus dem Ausführungsbeispiel der Figur 28 ausgebildet. Allerdings weist der zweite Aufnahmebereich 92c keine Mundhygienemitteldurchführung auf. Der erste Aufnahmebereich 14c ist dazu vorgesehen, ein Mundhygienemittel, beispielsweise wie im Ausführungsbeispiel der Figuren 1 bis 27 beschrieben in zumindest zwei verschiedenen Anwendungsstellungen aufzunehmen. Der zweite Aufnahmebereich 92c ist hingegen zum Aufnehmen eines Mundhygienemittels in lediglich einer Anwendungsstellung vorgesehen. Ferner kann der zweite Verstaubereich 94c genutzt werden, um ein Mundhygienemittel verstaut zu lagern. Es kann somit beispielsweise ein erstes Mundhygienemittel in einer der möglichen Anwendungsstellungen in dem ersten Aufnahmebereich 14c angeordnet sein und gleichzeitig ein, insbesondere zu dem ersten Mundhygienemittel identisches zweites Mundhygienemittel in dem zweiten Verstaubereich 94c gelagert werden. Insbesondere ist denkbar, dass ein Grundkörper einen Verstaubereich mit einer Tiefe aufweist, die einem Mehrfachen einer Dicke eines zu verstauenden Mundhygienemittels entspricht. Es können so mehrere Mundhygienemittel übereinander und/oder nebeneinander in demselben Verstaubereich verstaut werden.

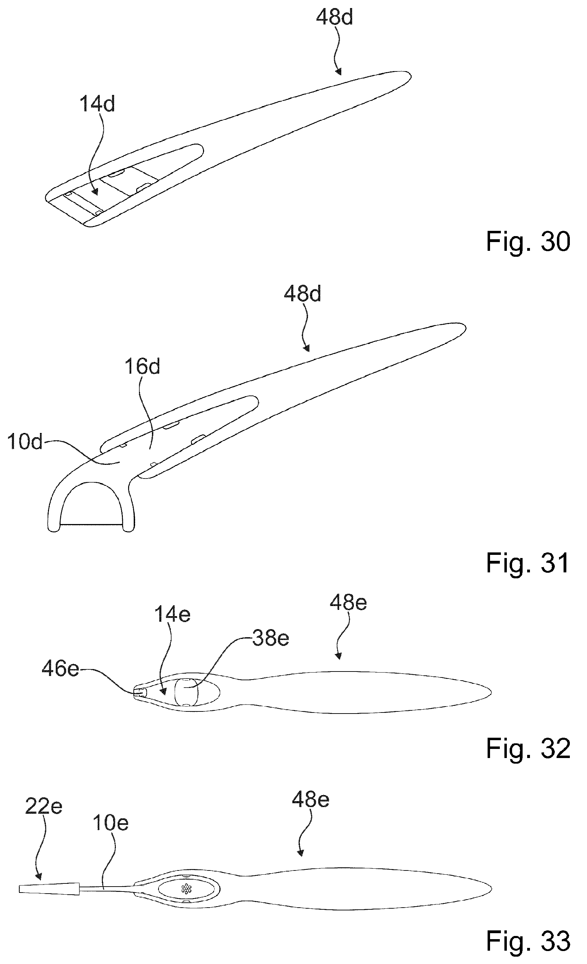

Die Figur 30 zeigt eine Unterseite 36d einer vierten Mundhygienehaltegriffvorrichtung 48d in einer schematischen Darstellung. Die Mundhygienehaltegriffvorrichtung 48d weist einen Aufnahmebereich 14d auf, der zur Aufnahme eines als Flosser ausgebildeten Mundhygienemittels 10d in einer Anwendungsstellung vorgesehen ist (vergleiche auch Figur 31).

Die Figur 31 zeigt die vierte Mundhygienehaltegriffvorrichtung 48d mit dem in einer Anwendungsstellung eingelegten Mundhygienemittel 10d in einer schematischen Darstellung. Das Mundhygienemittel 10d ist als ein Flosser ausgebildet. In der Anwendungsstellung ist ein Griffelement 16d des Mundhygienemittels 10d in dem Aufnahmebereich 14d fixiert.

Die Figur 32 zeigt eine Unterseite 36e einer fünften Mundhygienehaltegriffvorrichtung 48e in einer schematischen Darstellung. Die Mundhygienehaltegriffvorrichtung 48e weist einen Aufnahmebereich 14e auf, der zur Aufnahme eines als Interdentalreinigers ausgebildeten Mundhygienemittels 10e in einer Anwendungsstellung vorgesehen ist. Der Aufnahmebereich 14e weist eine Zugangsöffnung 38e sowie eine Mundhygienemitteldurchführung 46e auf. Der Aufnahmebereich 14e ist zur Aufnahme des Mundhygienemittels 10e in einer von der Anwendungsstellung verschiedenen weiteren Anwendungsstellung vorgesehen. In der weiteren Anwendungsstellung tritt ein Reinigungsbereich 22e des Mundhygienemittels 10e durch die Mundhygienemitteldurchführung 46e hindurch, analog zu dem Ausführungsbeispiel der Figuren 1 bis 27.

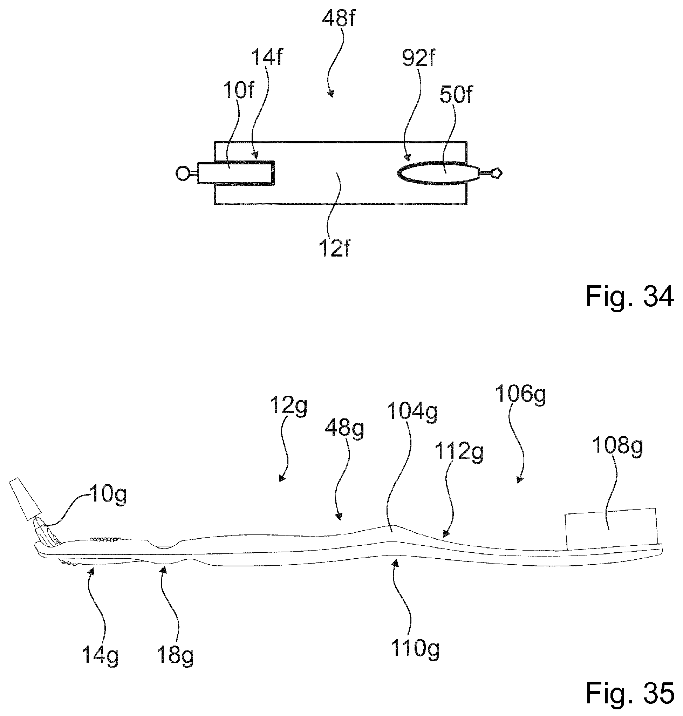

Die Figur 33 zeigt die fünfte Mundhygienehaltegriffvorrichtung 48e mit dem in einer Anwendungsstellung eingelegten Mundhygienemittel 10e in einer schematischen Darstellung. Das Mundhygienemittel 10e ist als Interdentalreiniger ausgebildet. Die Figur 34 zeigt ein System mit einer Mundhygienehaltegriffvorrichtung 48f, mit einem Mundhygienemittel 10f und mit einem zu dem ersten Mundhygienemittel 10f differierend ausgebildeten weiteren Mundhygienemittel 50f in einer schematischen Darstellung. Die Mundhygienehaltegriffvorrichtung 48f weist einen Grundkörper 12f mit einem ersten Aufnahmebereich 14f und mit einem zweiten Aufnahmebereich 92f auf. Der erste Aufnahmebereich 14f ist zur Aufnahme des Mundhygienemittels 10f in einer Anwendungsstellung vorgesehen. Der zweite Aufnahmebereich 92f ist zur Aufnahme des weiteren Mundhygienemittels 50f in einer weiteren Anwendungsstellung vorgesehen. Insbesondere können der erste Aufnahmebereich 14f und der zweite Aufnahmebereich 92f identisch oder differierend ausgebildet sein. Ferner ist denkbar, dass der Grundkörper zumindest einen Verstaubereich aufweist, der zur Aufnahme zumindest eines der Mundhygienemittel in zumindest einer Verstaustellung vorgesehen ist.

In Figur 35 ist eine Seitenansicht einer siebten Mundhygienehaltegriffvorrichtung 48g mit einem Mundhygienemittel 10g gezeigt. Die siebte Mundhygienehaltegriffvorrichtung 48g ist Teil eines Zahnbürstengriffs 104g einer Zahnbürste 106g. Das Mundhygienemittel 10g ist in einer Anwendungsstellung in einen Aufnahmebereich 14g eines Grundkörpers 12g des Mundhygienemittels 10g eingelegt. Die Zahnbürste 106g weist ein Borstenfeld 108g auf, welches lediglich schematisch dargestellt ist. Der Aufnahmebereich 14g der Mundhygienehaltegriffvorrichtung 48g ist dem Borstenfeld 108g gegenüberliegend angeordnet. Analog zu dem Ausführungsbeispiel der Figuren 1 bis 27 weist die Mundhygienehaltegriffvorrichtung 48g einen Verstaubereich 18g zur Aufnahme des Mundhygienemittels in zumindest einer Verstaustellung auf. Ist das erste Mundhygienemittel 10g im Verstaubereich 18g angeordnet, dient die Mundhygienehaltegriffvorrichtung 48g zumindest teilweise als Griff für die Zahnbürste 104g. Explizit ersichtlich sind auch eine Daumenauflagefläche 110g und ein Übergang 112g zum Zahnbürstenhals.

## Patentansprüche

1. Mundhygienehaltegriffvorrichtung, die zu einem Halten eines Mundhygienemittels (10a; 10d; 10e; 10f; 10g), insbesondere einer Interdentalbürste, vorgesehen ist, mit zumindest einem Grundkörper (12a; 12b; 12c; 12d; 12e, 12f; 12g), welcher zumindest einen Aufnahmebereich (14a; 14b; 14c; 14d; 14e; 14f; 14g) zu einer Aufnahme des Mundhygienemittels (10a; 10d; 10e; 10f; 10g) in einer Anwendungsstellung aufweist, **dadurch gekennzeichnet, dass** der Aufnahmebereich (14a; 14b; 14c; 14d; 14e; 14f; 14g) des Grundkörpers (12a; 12b; 12c; 12d; 12e, 12f; 14g) länger als 30 mm und zur Aufnahme eines Griffelements (16a, 16d, 16e, 16f) des Mundhygienemittels (10a; 10d; 10e, 10f; 10g) vorgesehen ist.

2. Mundhygienehaltegriffvorrichtung nach dem Oberbegriff des Anspruch 1 und insbesondere nach Anspruch 1, **dadurch gekennzeichnet, dass** der Grundkörper (12a; 12b; 12c; 12d; 12e; 12g) zumindest einen Verstaubereich (18a; 18b; 18c; 18g) zur Aufnahme des Mundhygienemittels (10a; 10d; 10e; 10f; 10g) in einer Verstaustellung aufweist.

3. Mundhygienehaltegriffvorrichtung nach Anspruch 2, **dadurch gekennzeichnet, dass** der Aufnahmebereich (14a; 14b; 14c; 14d; 14e; 14f; 14g) den Verstaubereich (18a; 18b; 18c; 18g) zumindest teilweise ausbildet.

4. Mundhygienehaltegriffvorrichtung nach Anspruch 2 oder 3, **dadurch gekennzeichnet, dass** der Verstaubereich (18a; 18b; 18c; 18g) auf einer dem Aufnahmebereich (14a; 14b; 14c; 14d; 14e; 14f; 14g) abgewandten Seite (20a) einen kleineren Querschnitt aufweist als der Aufnahmebereich (14a; 14b; 14c; 14d; 14e;14f; 14g).

5. Mundhygienehaltegriffvorrichtung nach einem der Ansprüche 2 bis 4, **dadurch gekennzeichnet, dass** der Verstaubereich (18a; 18b; 18c; 18g) dazu vorgesehen ist, einen Reinigungsbereich (22a) des Mundhygienemittels (10a; 10d; 10e; 10f; 10g) berührungsfrei zu lagern.

6. Mundhygienehaltegriffvorrichtung nach Anspruch 5, **dadurch gekennzeichnet, dass** der Verstaubereich (18a; 18b; 18c; 18g) eine Mantelfläche (24a) aufweist, welche den Reinigungsbereich (22a) des Mundhygienemittels (10a; 10d; 10e; 10f; 10g) in zumindest einer Schnittebene senkrecht zu einer Haupterstreckungsrichtung (42a) des Grundkörpers (12a; 12b; 12c; 12d; 12e; 12g) über einen Winkelbereich von mehr als 180° umgibt.

7. Mundhygienehaltegriffvorrichtung nach einem der Ansprüche 2 bis 6, **dadurch gekennzeichnet, dass** der Aufnahmebereich (14a; 14b; 14c; 14d; 14e; 14f; 14g) zumindest ein Fixierelement (26a) aufweist, welches zu einem zumindest teilweisen Fixieren des Mundhygienemittels (10a; 10d; 10e; 10f; 10g) in der Anwendungsstellung und in der Verstaustellung vorgesehen ist.

8. Mundhygienehaltegriffvorrichtung nach Anspruch 7, **dadurch gekennzeichnet, dass** das Fixierelement (26a) als eine Erhebung ausgebildet ist, die sich entlang zumindest einer Richtung (28a) über höchstens 10 % einer Erstreckung des Grundkörpers (12a; 12b; 12c; 12d; 12e; 12g) entlang der Richtung (28a) erstreckt.

9. Mundhygienehaltegriffvorrichtung nach einem der vorhergehenden Ansprüche, **dadurch gekennzeichnet, dass** der Grundkörper (12a; 12b; 12c; 12d; 12e; 12g) zumindest einen Griffbereich (30a) aufweist, der in einer Projektion senkrecht zu einer Haupterstreckungsrichtung (32a) des Aufnahmebereichs (14a; 14b; 14c; 14d; 14e; 14f; 14g) den Aufnahmebereich (14a; 14b; 14c; 14d; 14e; 14f; 14g) zumindest teilweise überlagert.

10. Mundhygienehaltegriffvorrichtung nach Anspruch 9, **dadurch gekennzeichnet, dass** der Griffbereich (30a) dem Aufnahmebereich (14a; 14b; 14c; 14d; 14e; 14f; 14g) gegenüberliegend auf einer Oberseite (34a) des Grundkörpers (12a; 12b; 12c; 12d; 12e; 12g) angeordnet ist.

11. Mundhygienehaltegriffvorrichtung nach Anspruch 10, **dadurch gekennzeichnet, dass** der Grundkörper (12a; 12b; 12c; 12d; 12e; 12f; 12g) zumindest eine dem Aufnahmebereich (14a; 14b; 14c; 14d; 14e; 14f; 14g) gegenüberliegend auf der Oberseite (34a) des Grundkörpers (12a; 12b; 12c; 12d; 12e; 12g) angeordnete Zugangsöffnung (38a) aufweist, durch welche hindurch der Aufnahmebereich (14a; 14b; 14c; 14d; 14e; 14f; 14g) zumindest teilweise zugänglich ist.

12. Mundhygienehaltegriffvorrichtung nach einem der vorhergehenden Ansprüche, **dadurch gekennzeichnet, dass** der Grundkörper (12a; 12b; 12c; 12d; 12e; 12f; 12g) zumindest einen Handgriffbereich (40a) aufweist, der in einer Projektion senkrecht zu einer Haupterstreckungsrichtung (32a) des Aufnahmebereichs (14a; 14b; 14c; 14d; 14e; 14f; 14g) zumindest teilweise neben dem Aufnahmebereich (14a; 14b; 14c; 14d; 14e; 14f; 14g) angeordnet ist.

13. Mundhygienehaltegriffvorrichtung nach einem der vorhergehenden Ansprüche, **dadurch gekennzeichnet, dass** der Aufnahmebereich (14a; 14b; 14c; 14d; 14e; 14f; 14g) zu einer Aufnahme des Mundhygienemittels (10a; 10d; 10e; 10g) in einer von der Anwendungsstellung verschiedenen weiteren Anwendungsstellung vorgesehen ist.

14. Mundhygienehaltegriffvorrichtung nach Anspruch 13, **dadurch gekennzeichnet, dass** der Aufnahmebereich (14a; 14b; 14c; 14d; 14e; 14f; 14g) dazu vorgesehen ist, einen Reinigungsbereich (22a) des Mundhygienemittels (10a; 10d; 10e; 10f; 10g) in der weiteren Anwendungsstellung in einem anderen Winkel relativ zu einer Haupterstreckungsrichtung (42a) des Grundkörpers (12a; 12b; 12c; 12d; 12e; 12g) zu lagern als in der Anwendungsstellung.

15. Mundhygienehaltegriffvorrichtung nach Anspruch 13 oder 14, **dadurch gekennzeichnet, dass** der Aufnahmebereich (14a; 14b; 14c; 14d; 14e; 14g) dazu vorgesehen ist, das Mundhygienemittel (10a; 10d; 10e; 10f; 10g) in der weiteren Anwendungsstellung an einer anderen Position entlang einer Haupterstreckungsrichtung (42a) des Grundkörpers (12a; 12b; 12c; 12d; 12e; 12g) zu lagern als in der Anwendungsstellung.

16. Mundhygienehaltegriffvorrichtung nach einem der Ansprüche 13 bis 15, **dadurch gekennzeichnet, dass** der Aufnahmebereich (14a; 14b; 14c; 14d; 14e; 14f; 14g) zumindest ein Fixierelement (44a) aufweist, welches zu einem zumindest teilweisen Fixieren des Mundhygienemittels (10a; 10d; 10e; 10f; 10g) in der Anwendungsstellung und in der weiteren Anwendungsstellung vorgesehen ist.

17. Mundhygienehaltegriffvorrichtung nach einem der Ansprüche 13 bis 16, **dadurch gekennzeichnet, dass** der Grundkörper (12a; 12b; 12c; 12d; 12e; 12g) zumindest eine Mundhygienemitteldurchführung (46a; 46b) aufweist, durch welche das Mundhygienemittel (10a; 10d; 10e; 10f; 10g) in der weiteren Anwendungsstellung zumindest teilweise hindurchtritt.

18. Mundhygienehaltegriffvorrichtung zumindest nach Anspruch 17, **dadurch gekennzeichnet, dass** die Mundhygienemitteldurchführung (46a; 46b) dem Aufnahmebereich (14a; 14b; 14c; 14d; 14e; 14f; 14g) gegenüberliegend auf einer Oberseite (34a) des Grundkörpers (12a; 12b; 12c; 12d; 12e; 12g) angeordnet ist.

19. Mundhygienehaltegriffvorrichtung nach einem der Ansprüche 13 bis 18, **dadurch gekennzeichnet, dass** der Aufnahmebereich (14a; 14b; 14c; 14d; 14e; 14f; 14g) dazu vorgesehen ist, das Mundhygienemittel (10a; 10d; 10e; 10f; 10g) in der weiteren Anwendungsstellung zumindest teilweise zu verbiegen.

20. System mit zumindest einer Mundhygienehaltegriffvorrichtung (48a) nach einem der vorhergehenden Ansprüche und mit zumindest einem Mundhygienemittel (10a; 10d; 10e; 10f; 10g).

21. System nach Anspruch 20, **dadurch gekennzeichnet, dass** das Mundhygienemittel (10a; 10d; 10e; 10f; 10g) zumindest ein Griffelement (16a) mit einer Länge von wenigstens 30 mm aufweist.

22. System nach Anspruch 20 oder 21, **gekennzeichnet durch** zumindest ein von dem Mundhygienemittel (10a; 10d; 10e; 10f) differierend ausgebildetes weiteres Mundhygienemittel (50f).

23. Zahnbürste 106g mit zumindest einem Borstenfeld 108g und mit zumindest einer Mundhygienehaltegriffvorrichtung nach einem der Ansprüche 1 bis 19, deren Aufnahmebereich 14g dem Borstenfeld 108g gegenüberliegend angeordnet ist.
